(19) Europäisches Patentamt
European Patent Office
Office européen des brevets

(11) EP 2 656 425 B1

(12) **EUROPEAN PATENT SPECIFICATION**

(45) Date of publication and mention of the grant of the patent:
**10.12.2014 Bulletin 2014/50**

(21) Application number: **11808524.0**

(22) Date of filing: **20.12.2011**

(51) Int Cl.:
***H01M 8/10*** *(2006.01)* ***H01M 4/86*** *(2006.01)*

(86) International application number:
**PCT/US2011/066279**

(87) International publication number:
**WO 2012/088170 (28.06.2012 Gazette 2012/26)**

(54) **IONOMERS AND IONICALLY CONDUCTIVE COMPOSITIONS FOR USE AS ONE OR MORE ELECTRODE OF A FUEL CELL**

IONOMERE UND IONISCH LEITENDE MISCHUNGEN ZUR VERWENDUNG

IONOMÈRES ET COMPOSITIONS IONIQUEMENT CONDUCTRICES POUR UTILISATION COMME UN OU PLUSIEURS ÉLECTRODES D'UNE PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2010 US 201061425094 P**

(43) Date of publication of application:
**30.10.2013 Bulletin 2013/44**

(73) Proprietors:
- **E.I. Du Pont De Nemours and Company**
  **Wilmington, Delaware 19898 (US)**
- **TOYOTA JIDOSHA KABUSHIKI KAISHA**
  **Toyota-shi, Aichi-ken, 471-8571 (JP)**

(72) Inventors:
- **TAKAMI, Masayoshi**
  **Hamamatu-Shi**
  **shizuoka 430-0815 (JP)**
- **YOSHIDA, Toshihiko**
  **Fujimi-Shi**
  **saitama 354-0034 (JP)**
- **KOBAYASHI, Misaki**
  **Nisshin-Shi**
  **aichi 470-0104 (JP)**
- **PERRY, Randal, L.**
  **Hockessin**
  **Delaware 19707 (US)**
- **ROELOFS, Mark, Gerrit**
  **Earleville**
  **Maryland 21919 (US)**
- **WHELAND, Robert, Clayton**
  **Wilmington**
  **Delaware 19807 (US)**
- **ATEN, Ralph, Munson**
  **Chadds Ford**
  **Pennsylvania 19317 (US)**

(74) Representative: **Matthews, Derek Peter**
**Dehns**
**St Bride's House**
**10 Salisbury Square**
**London**
**EC4Y 8JD (GB)**

(56) References cited:
**EP-A1- 1 209 197** **EP-A1- 1 596 453**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 656 425 B1

## Description

### FIELD OF THE INVENTION

This invention relates to solid polymer electrolyte materials for use in one or more electrode of a fuel cell. The solid polymer electrolyte materials comprise one or more ionomer which comprises polymerized units of monomers A and monomers B, wherein monomers A are perfluoro dioxole or perfluoro dioxolane monomers, and the monomers B are functionalized perfluoro olefins having fluoroalkyl sulfonyl, fluoroalkyl sulfonate or fluoroalkyl sulfonic acid pendant groups, $CF_2=CF(O)[CF_2]_nSO_2X$.

### TECHNICAL BACKGROUND OF THE INVENTION

It has long been known in the art to form ionically conducting membranes and gels from organic polymers containing ionic pendant groups. Such polymers are known as ionomers. Particularly well-known ionomer membranes in widespread commercial use are Nafion® Membranes available from E. I. du Pont de Nemours and Company. Nafion® is formed by copolymerizing tetrafluoroethylene (TFE) with perfluoro(3,6-dioxa-4-methyl-7-octenesulfonyl fluoride), as disclosed in U.S. Patent 3,282,875. Also known are copolymers of TFE with perfluoro (3-oxa-4-pentene sulfonyl fluoride), as disclosed in U.S. Patent 4,358,545. The copolymers so formed are converted to the ionomeric form by hydrolysis, typically by exposure to an appropriate aqueous base, as disclosed in U.S. Patent 3,282,875. Lithium, sodium and potassium, for example, are all well known in the art as suitable cations for the above cited ionomers.

In the polymers above-cited, the fluorine atoms provide more than one benefit. The fluorine groups on the carbons proximate to the sulfonyl group in the pendant side chain provide the electronegativity to render the cation sufficiently labile so as to provide high ionic conductivity. Replacement of those fluorine atoms with hydrogen results in a considerable reduction in ionic mobility and consequent loss of conductivity.

The remainder of the fluorine atoms afford the chemical and thermal stability to the polymer normally associated with fluorinated polymers. This has proven to be of considerable value in such applications as the well-known "chlor-alkali" process.

United States Patent No. 7,220,508 to Watakabe et al. discloses a solid polymer electrolyte material made of a copolymer comprising a repeating unit based on a fluoromonomer A which gives a polymer having an alicyclic structure in its main chain by radical polymerization, and a repeating unit based on a fluoromonomer B of the following formula: $CF_2=CF(R^f)_jSO_2X$ where j is 0 or 1, X is a fluorine atom, a chlorine atom or OM (wherein M is a hydrogen atom, an alkali metal atom or a (alkyl)ammonium group), and $R^f$ is a $C_{1-20}$ polyfluoroalkylene group having a straight chain or branched structure which may contain ether oxygen atoms. Despite this disclosure, the widespread use of ionomers in batteries and fuel cells is not yet commercially viable because the appropriate balance of properties has not yet been achieved. In particular, the appropriate balance of ease of manufacture, toughness and high ionic conductivity is required. In the case of ionomers used as electrode materials, there is a need for high oxygen permeability in addition to the above requirements. Moreover, preferably, the ionomer is a film forming polymer; and, also preferably, the polymer is not readily water soluble. This combination of properties is not easily obtainable.

### SUMMARY OF THE INVENTION

This invention provides a solid polymer electrolyte material for use in an electrode of a fuel cell comprising one or more ionomer which comprises: (a) polymerized units of one or more fluoromonomer $A_1$ or $A_2$ (below):

$A_1$

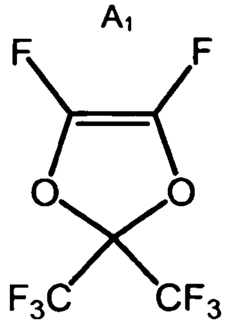

$A_2$

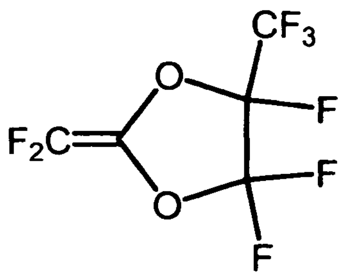

and

(b) polymerized units of one or more fluoromonomer (B): $CF_2$=CF-O-$[CF_2]_n$-$SO_2X$

wherein n = 2, 3, 4 or 5 and X = F, Cl, OH or OM, and wherein M is a monovalent cation; and wherein the ionomer has a through plane proton conductivity, at 80°C and 95% relative humidity, greater than 70 mS/cm, and an oxygen permeability at 23°C and 0% relative humidity greater than 1 x $10^{-9}$ scc cm/($cm^2$ s cmHg).

In an embodiment, the ionomer of the solid polymer electrolyte material further comprises polymerized units of one or more fluoromonomer (C), $CF_2$=CF-O-$[CF_2]_m$-$CF_3$ wherein m = 0, 1, 2, 3, or 4.

In an embodiment, the ionomer of the solid polymer electrolyte material further comprises polymerized units of fluoromonomer (D), $CF_2$=$CF_2$.

In an embodiment, the ionomer of the solid polymer electrolyte material has less than 500 carboxyl pendant groups or end groups per million carbon atoms of polymer.

In an embodiment, the ionomer of the solid polymer electrolyte material has less than 250 carboxyl pendant groups or end groups per million carbon atoms of polymer.

In an embodiment, the ionomer of the solid polymer electrolyte material has less than 50 carboxyl pendant groups or end groups per million carbon atoms of polymer.

In an embodiment, the ionomer of the solid polymer electrolyte material has more than 250 -$SO_2X$ groups as end groups on the polymer backbone per million carbon atoms of polymer.

In an embodiment, 50 to 100% of the polymer chain end groups of the ionomer of the solid polymer electrolyte material are -$SO_2X$ groups wherein X = F, Cl, OH or OM and wherein M is a monovalent cation.

In an embodiment, 50 to 100% of the polymer chain end groups of the ionomer of the solid polymer electrolyte material are perfluoroalkyl groups terminating with -$SO_2X$ groups, wherein X = F, Cl, OH or OM and wherein M is a monovalent cation.

In an embodiment, the ionomer of the solid polymer electrolyte material has X = F or Cl and has a Tg in the range of 100 to 250°C, as measured by Differential Scanning Calorimetry (DSC).

In an embodiment, the ionomer of the solid polymer electrolyte material has X = OH or OM and has a Tg, as measured by Dynamic Mechanical Analysis (DMA), in the range of 200 to 270°C.

In an embodiment, the ionomer of the solid polymer electrolyte material has a solubility in hexafluorobenzene, at 23°C, of more than 15 grams of ionomer per 1000 grams of hexafluorobenzene when in the X = F or X = Cl form.

In an embodiment, the ionomer of the solid polymer electrolyte material has a solubility in hexafluorobenzene, at 23°C, of more than 100 grams of ionomer per 1000 grams of hexafluorobenzene when in the X = F or X = Cl form.

In an embodiment, the ionomer of the solid polymer electrolyte material has an equivalent weight in the range of 550 to 1400 grams.

In an embodiment, the ionomer of the solid polymer electrolyte material has an equivalent weight in the range of 650 to 1100 grams.

In some embodiments, more than one of the above described features may be present for a given inventive embodiment.

For each embodiment for which the solid polymer electrolyte material comprises a specified ionomer, there also exists an embodiment for which the solid polymer electrolyte material consists of, or consists essentially of that specified ionomer.

In another embodiment, the solid polymer electrolyte material of the present invention is used in one or more electrode of an electrochemical cell, such as a fuel cell.

Accordingly, for each embodiment describing a solid polymer electrolyte material, the invention also provides an electrode of a fuel cell comprising the solid polymer electrolyte material.

The following monomer abbreviations are used herein: PDD monomer is perfluorodimethyl dioxole (monomer $A_1$); PFSVE monomer is $CF_2$=$CFOCF_2CF_2SO_2F$; and PSEPVE monomer is $CF_2$=$CFOCF_2CF(CF_3)OCF_2CF_2SO_2F$. TFE monomer is tetrafluoroethylene, $CF_2$=$CF_2$.

## BRIEF DESCRIPTION OF THE DRAWINGS

Figure 1 depicts a plot of the oxygen permeability of ionomer films (y axis) vs. the equivalent weight of the ionomer (x axis) for a series of p(PDD/PFSVE), p(TFE/PFSVE) and p(TFE/PSEPVE) ionomers in the acid form.

## DETAILED DESCRIPTION

Where a range of numerical values is recited herein, including lists of upper preferable values and lower preferable values, unless otherwise stated, the range is intended to include the endpoints thereof, and all integers and fractions within the range. It is not intended that the scope of the invention be limited to the specific values recited when defining a range. Moreover, all ranges set forth herein are intended to include not only the particular ranges specifically

described, but also any combination of values therein, including the minimum and maximum values recited.

By "fluorinated sulfonic acid polymer" it is meant a polymer or copolymer with a highly fluorinated backbone and recurring side chains attached to the backbone with the side chains carrying the sulfonic acid group (-$SO_3H$). The term "highly fluorinated" means that at least 90% of the total number of halogen and hydrogen atoms attached to the polymer backbone and side chains are fluorine atoms. In another embodiment, the polymer is perfluorinated, which means 100% of the total number of halogen and hydrogen atoms attached to the backbone and side chains are fluorine atoms. By "sulfonic acid pendant groups" it is meant groups that are pendant to the polymer backbone as recurring side chains and which side chains terminate in a sulfonic acid functionality, -$SO_3H$. The polymer may have small amounts of the acid functionality in the salt or the acid halide form. Typically at least about 8 mol %, more typically at least about 13 mol % or at least about 19% of monomer units have a pendant group with the sulfonic acid functionality.

Herein, "polymer chain end groups" refers to the end groups at each end of the length of the polymer chain, but does not include the pendant groups on the recurring side chains.

Herein, the term "ionomer" or "solid polymer electrolyte material" includes the precursor polymers with -$SO_2X$ groups having X = F or X = Cl that can be hydrolyzed and acidified to give the acid form (X = OH), in addition to ionomers having -$SO_2X$ groups with X = OH or OM. Herein, the polymer compositions are represented by the constituent monomers that become polymerized units of the precursor polymer, with the accompanying text indicating the form of the -$SO_2X$ groups. For example, polymers formed from PDD and PFSVE monomers comprise polymerized units of PFSVE containing -$SO_2F$ groups, which may be converted to -$SO_3H$ groups. The former precursor polymer is represented as p(PDD/PFSVE) with the text (or the context) indicating that the -$SO_2X$ groups are in the sulfonyl fluoride form (-$SO_2F$ groups); while the latter is referred to as p(PDD/PFSVE) with the text (or the context) indicating that the -$SO_2X$ groups are in the acid form (-$SO_3H$ groups). That is, in the polymer, the unit is referred to herein as the originating monomer (e.g. PFSVE) regardless of whether the polymer is in the sulfonyl fluoride form or the acid form.

Herein, "equivalent weight" of a polymer (ionomer) means the weight of polymer that will neutralize one equivalent of base, wherein either the polymer is the acid-form (sulfonic acid) polymer, or the polymer may be hydrolyzed and acidified such that the -$SO_2X$ groups are converted to the acid form (-$SO_3H$). That is, in the polymer, the unit is referred to herein as the originating monomer (e.g. PFSVE) regardless of whether the polymer is in the sulfonyl fluoride form or the acid form.

Herein, ambient conditions refers to room temperature and pressure, taken to be 23°C and 760 mmHg.

Herein, unless otherwise stated, the glass transition temperature of ionomers, Tg, is measured by Dynamic Mechanical Analysis (DMA). Films of the ionomer in acid-form, of thickness about 30 $\mu$m to 100 $\mu$m, are heated in a DMA instrument (TA Instruments, New Castle, DE, model Q800) while being subjected to an oscillatory force at 1 Hz frequency. The temperature at the largest peak in tan($\delta$) is taken as the glass transition temperature. Alternatively, where stated, the Tg is measured using Differential Scanning Calorimetry (DSC). In this case, small samples (about 2 to 5 mg) of the ionomer are analyzed for heat absorption and release on heating and cooling using a DSC (TA Instruments, New Castle DE, model Q2000). The temperature of the midpoint of the second order endothermic transition on the second heating of the sample is taken as the Tg.

Herein, the number average molecular weight, Mn, and weight average molecular weight, Mw, are determined by Size Exclusion Chromatography (SEC) as described below. The ionomers described herein are dispersed at high temperatures (for example, as described in Example 14) and the dispersion is analyzed by SEC (integrated multidetector size exclusion chromatography system GPCV/LS 2000TM, Waters Corporation, Milford, MA). Four SEC styrene-divinyl benzene columns (from Shodex, Kawasaki, Japan) are used for separation: one guard (KD-800P), two linear (KD-806M), and one to improve resolution at the high molecular weight region of a polymer distribution (KD-807). The chromatographic conditions are a temperature of 70°C, flow rate of 1.00 ml/min, injection volume of 0.2195 ml, and run time of 60 min. The column is calibrated using PMMA narrow standards. The sample is diluted to 0.10 wt % with a mobile phase of N,N-dimethylacetamide + 0.11% LiCl + 0.03% toluenesulfonic acid and then injected onto the column. Refractive index and viscosity detectors are used. The refractive index response is analyzed using a dn/dc of 0.0532 mUg that is determined with other well-characterized samples of p(TFE/PFSVE) and p(TFE/PSEPVE) ionomer dispersions. The molecular weights are reported in units of Daltons, although recorded herein as unitless, as is conventional in the art.

In an embodiment, the solid polymer electrolyte material of the present invention is a copolymer (ionomer) comprising polymerized units of a first fluorinated vinyl monomer A and polymerized units of a second fluorinated vinyl monomer B, wherein monomers A are perfluoro dioxole or perfluoro dioxolane monomers of structure $A_1$ or $A_2$ (below):

$A_1$

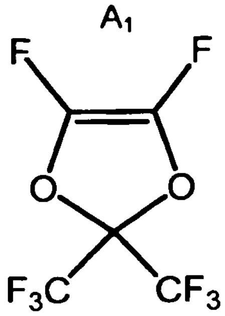

$A_2$

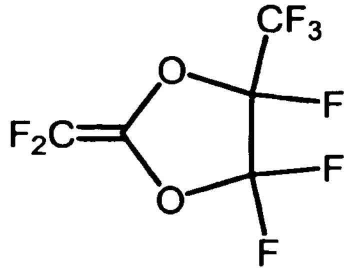

and the monomers B are functionalized perfluoro polyolefins having fluoroalkyl sulfonate pendant groups or fluoroalkyl sulfonic acid pendant groups, $CF_2=CF(O)[CF_2]_nSO_2X$, wherein n = 2, 3, 4 or 5 and X = F, Cl, OH or OM, and wherein M is a monovalent cation. The solid polymer electrolyte material has a through plane proton conductivity, at 80°C and 95% relative humidity, greater than 70 mS/cm, and an oxygen permeability at 23°C and 0% relative humidity greater than $1 \times 10^{-9}$ scc cm/($cm^2$ s cmHg).

In an embodiment, the solid polymer electrolyte material has a through plane proton conductivity, at 80°C and 95% relative humidity, greater than 80 mS/cm, and an oxygen permeability at 23°C and 0% relative humidity greater than $2 \times 10^{-9}$ scc cm/($cm^2$ s cmHg).

In an embodiment, the copolymer of monomers A and B may further comprise a repeating unit based on a fluoromonomer of the following formula (C) $CF_2=CF(O)[CF_2]_m(CF_3)$, wherein m = 0, 1, 2, 3 or 4. Herein, the monomer C for which m = 0 is referred to as PMVE (perfluoromethylvinylether); and the monomer C for which m = 1 is referred to as PEVE (perfluoroethylvinylether).

In another embodiment, the copolymer of monomers A and B may further comprise a repeating unit of monomer D, tetrafluoroethylene, $CF_2=CF_2$, referred to herein as TFE.

In an embodiment, the copolymer of monomers A and B may further comprise a repeating unit of monomer C or monomer D, or a combination thereof.

For each embodiment for which the solid polymer electrolyte material consists of a specified copolymer (ionomer), there also exists an embodiment for which the solid polymer electrolyte material consists essentially of that specified ionomer, and an embodiment for which the solid polymer electrolyte material comprises that specified ionomer.

In an embodiment the ionomer of the solid polymer electrolyte material comprises at least 30 mole percent of polymerized units of one or more fluoromonomer $A_1$ or $A_2$ or combination thereof.

In an embodiment, the ionomer of the solid polymer electrolyte material comprises at least 12 mole percent of polymerized units of one or more fluoromonomer B.

In an embodiment, the ionomer of the solid polymer electrolyte material comprises: (a) from 51 to 85 mole percent of polymerized units of one or more fluoromonomer $A_1$ or $A_2$ or combination thereof; and (b) from 15 to 49 mole percent of polymerized units of one or more fluoromonomer B. In one such embodiment, preferably monomer A is $A_1$ (PDD), and monomer B is PFSVE.

In an embodiment, the ionomer of the solid polymer electrolyte material comprises: (a) from 61 to 75 mole percent of polymerized units of one or more fluoromonomer $A_1$ or $A_2$ or combination thereof; and (b) from 25 to 39 mole percent of polymerized units of one or more fluoromonomer B. In one such embodiment, preferably monomer A is A1 (PDD), and monomer B is PFSVE.

In another embodiment, the ionomer of the solid polymer electrolyte material comprises: (a) from 20 to 85 mole percent of polymerized units of one or more fluoromonomer $A_1$ or $A_2$ or combination thereof; (b) from 14 to 49 mole percent of polymerized units of one or more fluoromonomer B; and (c) from 0.1 to 49 mole percent of polymerized units of one or more fluoromonomer C.

In a further embodiment, the ionomer of the solid polymer electrolyte material comprises: (a) from 20 to 85 mole percent of polymerized units of one or more fluoromonomer $A_1$ or $A_2$ or combination thereof; (b) from 14 to 49 mole percent of polymerized units of one or more fluoromonomer B; and (c) from 0.1 to 49 mole percent of polymerized units of fluoromonomer D.

In yet another embodiment, the ionomer of the solid polymer electrolyte material comprises: (a) from 20 to 85 mole percent of polymerized units of one or more fluoromonomer $A_1$ or $A_2$ or combination thereof; (b) from 14 to 49 mole percent of polymerized units of one or more fluoromonomer B; and (c) from 0.1 to 49 mole percent of polymerized units of fluoromonomer C, or fluoromonomer D, or a combination thereof.

In an embodiment, the copolymer has Mn greater than 60,000, preferably greater than 100,000.

In an embodiment, the monomers B used in the polymerization are $CF_2=CF(O)(CF_2CF_2)SO_2F$, (i.e. n = 2 and X = F in the formula above) which is referred to herein as PFSVE (perfluorosulfonylvinylether). The fluorine atom of the

sulfonyl fluoride group may be replaced with other X groups described above by methods discussed further herein. This may be achieved by conversion of the $-SO_2F$ groups in the monomers prior to polymerization, but is also readily achieved by conversion of the $-SO_2F$ groups in the polymer. The more highly conductive form of the copolymer has sulfonic acid groups; that is, the sulfonyl fluoride groups ($-SO_2F$) are converted to sulfonic acid groups ($-SO_3H$).

In an embodiment, the polymer may be fluorinated after polymerization to reduce the concentrations of carbonyl fluorides, vinyl, and/or carboxyl groups. Fluorination may be accomplished by exposing the polymer crumb in the $-SO_2F$ form to elemental fluorine as described in patent document GB1210794, or by first drying and then flowing fluorine gas diluted in nitrogen over the polymer at elevated temperatures of 80-180°C. Herein, carboxyl groups are defined to be those present as carboxylic acids, anhydrides of carboxylic acids, dimers of carboxylic acids, or esters of carboxylic acids.

In an embodiment, the ionomer of the solid polymer electrolyte material comprises polymerized units of PDD and PFSVE monomers, wherein the PFSVE polymerized units are in the acid form (having pendant sulfonic acid groups as described below). For the solid polymer electrolyte material of the invention, higher equivalent weight of these ionomers favors higher oxygen permeability. Accordingly, in an embodiment, a preferred equivalent weight range (in grams) may be from as low as 600, or as low as 700, or as low as 800, or 900 g, and ranging as high as 1400, or as high as 1300, or 1200 g. In one such embodiment, the ionomer has an oxygen permeability, at 23°C and 0% relative humidity, of greater than $1 \times 10^{-9}$ scc cm/(cm$^2$ s cmHg) and, preferably, greater than $2 \times 10^{-9}$ scc cm/(cm$^2$ s cmHg), or even greater than $10 \times 10^{-9}$ scc cm/(cm$^2$ s cmHg).

Conversely, lower equivalent weight favors higher conductivity. Accordingly, in a preferred embodiment, the ionomer of the solid polymer electrolyte material comprises polymerized units of PDD and PFSVE monomers, wherein the PFSVE polymerized units are in the acid form (having pendant sulfonic acid groups), and wherein the ionomer has an equivalent weight (in grams) ranging from as low as 600 or as low as 700, or 750 g, and ranging as high as 1400 or as high as 1100, or 900 g. In one such embodiment, the ionomer has a through plane proton conductivity, at 80°C and 95% relative humidity, greater than 70 mS/cm, preferably greater than 90 mS/cm, or even greater than 100 mS/cm.

In an embodiment, the ionomer has an oxygen permeability, at 23°C and 0% relative humidity, of greater than $10 \times 10^{-9}$ scc cm/cm$^2$ s cmHg).

In an embodiment, the ionomer of the solid polymer electrolyte material has a through plane proton conductivity, at 80°C and 95% relative humidity, greater than 70 mS/cm, and an oxygen permeability, at 23°C and 0% relative humidity, greater than $2 \times 10^{-9}$ scc cm/(cm$^2$ s cmHg), or even greater than $10 \times 10^{-9}$ scc cm/(cm$^2$ s cmHg).

In an embodiment, the ionomer of the solid polymer electrolyte material has a through plane proton conductivity, at 80°C and 95% relative humidity, greater than 90 mS/cm, and an oxygen permeability, at 23°C and 0% relative humidity, greater than $2 \times 10^{-9}$ scc cm/(cm$^2$ s cmHg), or even greater than $10 \times 10^{-9}$ scc cm/(cm$^2$ s cmHg).

In an embodiment, the ionomer of the solid polymer electrolyte material has a through plane proton conductivity, at 80°C and 95% relative humidity, greater than 100 mS/cm.

The fluoropolymers that contain $SO_2X$ groups (wherein X is a halogen) can be first converted to the sulfonate form ($SO_3^-$) by hydrolysis using methods known in the art. This may be done in the membrane form or when the polymer is in the form of crumb or pellets. For example, the polymer containing sulfonyl fluoride groups ($SO_2F$) may be hydrolyzed to convert it to the sodium sulfonate form by immersing it in 25% by weight NaOH for about 16 hours at a temperature of about 90°C followed by rinsing the film twice in deionized 90°C water using about 30 to about 60 minutes per rinse. Another possible method employs an aqueous solution of 6-20% of an alkali metal hydroxide and 5-40% polar organic solvent such as DMSO with a contact time of at least 5 minutes at 50-100°C followed by rinsing for 10 minutes. After hydrolyzing, the polymer crumb or polymer membrane can then be converted to another ionic form at any time by contacting the polymer with a salt solution of the desired cation. Final conversion to the acid form ($-SO_3H$) can be performed by contacting with an acid such as nitric acid and rinsing.

The solid polymer electrolyte material described herein may be suitable as ion exchange membranes, such as proton exchange membranes (also known as "PEM") in fuel cells. Alternatively, or additionally, the solid polymer electrolyte material described herein may find use in an electrode of a fuel cell, for example as an ionic conductor and binder in a catalyst layer, particularly the cathode.

The copolymer (ionomer) can be formed into membranes using any conventional method such as but not limited to extrusion and solution or dispersion film casting techniques. The membrane thickness can be varied as desired for a particular application. Typically, the membrane thickness is less than about 350 μm, more typically in the range of about 10 μm to about 175 μm. If desired, the membrane can be a laminate of two or more polymers such as two (or more) polymers having different equivalent weight. Such films can be made by laminating two or more membranes. Alternatively, one or more of the laminate components can be cast from solution or dispersion. When the membrane is a laminate, the chemical identities of the monomer units in the additional polymer(s) can independently be the same as or different from the identities of the analogous monomer units of any of the other polymers that make up the laminate. For the purposes of the present invention, the term "membrane," a term in common use in the art, is synonymous with the terms "film" or "sheet" which are terms in more general usage in the broader art but refer to the same articles.

The membrane may optionally include a porous support for the purposes of improving mechanical properties,

for decreasing cost and/or other reasons. The porous support may be made from a wide range of materials, such as but not limited to non-woven or woven fabrics, using various weaves such as the plain weave, basket weave, leno weave, or others. The porous support may be made from glass, hydrocarbon polymers such as polyolefins, (e.g., polyethylene, polypropylene), or perhalogenated polymers such as poly-chlorotrifluoroethylene. Porous inorganic or ceramic materials may also be used. For resistance to thermal and chemical degradation, the support preferably is made from a fluoropolymer; most preferably a perfluoropolymer. For example, the perfluoropolymer of the porous support can be a microporous film of polytetrafluoroethylene (PTFE) or a copolymer of tetrafluoroethylene with $CF_2$=$CFC_nF2_{n+1}$ (n=1 to 5) or ($CF_2$=CFO-($CF_2CF(CF_3)O)_mC_nF_{2n+1}$ (m=0 to 15, n=1 to 15). Microporous PTFE films and sheeting are known which are suitable for use as a support layer. For example, U.S. Patent 3,664,915 discloses uniaxially stretched film having at least 40% voids. U.S. Patents 3,953,566, 3,962,153 and 4,187,390 disclose porous PTFE films having at least 70% voids. The porous support may be incorporated by coating a polymer dispersion on the support so that the coating is on the outside surfaces as well as being distributed through the internal pores of the support. Alternately or in addition to impregnation, thin membranes can be laminated to one or both sides of the porous support. When the polymer dispersion is coated on a relatively non-polar support such as microporous PTFE film, a surfactant may be used to facilitate wetting and intimate contact between the dispersion and support. The support may be pre-treated with the surfactant prior to contact with the dispersion or may be added to the dispersion itself. Preferred surfactants are anionic fluorosurfactants such as Zonyl® or CapstoneTM from E. I. du Pont de Nemours and Company, Wilmington DE, USA. A more preferred fluorosurfactant is the sulfonate salt of Zonyl® FS 1033D (Capstone™ FS-10).

In an embodiment, the membrane may be "conditioned" prior to use, which conditioning may include subjecting the membrane to heat and or pressure, and may be performed in the presence of a liquid or gas, such as, for example water or steam, as described in United States Patent Application Publication No. 2009/0068528 A1. One potential consequence of this approach is that the membrane may be prepared in its fully hydrated form, which may be advantageous. By "fully hydrated" it is meant that the membrane contains substantially the maximum amount of water that is possible for it to contain under atmospheric pressure. The membrane can be hydrated by any known means, but typically by soaking it in an aqueous solution at temperatures above room temperature and up to 100°C. Typically the aqueous solution is an acidic solution, such as 10% to 15% aqueous nitric acid, optionally followed by pure water washes to remove excess acid. The soaking should be performed for at least 15 minutes, more typically for at least 30 minutes, and at above 60°C, more typically above 80°C, until the membrane is fully hydrated at atmospheric pressures.

The solid polymer electrolyte material described herein can be used in conjunction with fuel cells utilizing proton exchange membranes (also known as "PEM"). Examples include hydrogen fuel cells, reformed-hydrogen fuel cells, direct methanol fuel cells or other organic/air fuel cells (e.g. those utilizing organic fuels of ethanol, propanol, dimethyl- or diethyl ethers, formic acid, carboxylic acid systems such as acetic acid, and the like). The solid polymer electrolyte materials are also advantageously employed in membrane electrode assemblies (MEAs) for electrochemical cells. The membranes and processes described herein may also find use in cells for the electrolysis of water to form hydrogen and oxygen.

Fuel cells are typically formed as stacks or assemblages of MEAs, which each include a PEM, an anode electrode and cathode electrode, and other optional components. The fuel cells typically also comprise a porous electrically conductive sheet material that is in electrical contact with each of the electrodes and permits diffusion of the reactants to the electrodes, and is known as a gas diffusion layer, gas diffusion substrate or gas diffusion backing. When a catalyst, also known as an electrocatalyst, is coated on or applied to the PEM, the MEA is said to include a catalyst coated membrane (CCM). In other instances, fuel cells may comprise a CCM in combination with a gas diffusion backing (GDB) to form an unconsolidated MEA. Fuel cells may also comprise a membrane in combination with gas diffusion electrodes (GDE), that may or may not have catalyst incorporated within, to form a consolidated MEA.

A fuel cell is constructed from a single MEA or multiple MEAs stacked in series by further providing porous and electrically conductive anode and cathode gas diffusion backings, gaskets for sealing the edge of the MEAs, which also provide an electrically insulating layer, current collector blocks such as graphite plates with flow fields for gas distribution, end blocks with tie rods to hold the fuel cell together, an anode inlet and outlet for fuel such as hydrogen, a cathode gas inlet, and outlet for oxidant such as air.

MEAs and fuel cells therefrom are well known in the art. One suitable embodiment is described herein. An ionomeric polymer membrane is used to form a MEA by combining it with a catalyst layer, comprising a catalyst such as platinum or platinum-cobalt alloy, which is unsupported or supported on particles such as carbon particles, a proton-conducting binder which may be the same as the ionomer of the present invention, and a gas diffusion backing. The catalyst layers may be made from well-known electrically conductive, catalytically active particles or materials and may be made by methods well known in the art. The catalyst layer may be formed as a film of a polymer that serves as a binder for the catalyst particles. The binder polymer can be a hydrophobic polymer, a hydrophilic polymer or a mixture of such polymers. The binder polymer is typically ionomeric and can be the same ionomer as in the membrane, or it can be a different ionomer to that in the membrane. In one or more embodiments herein, the solid polymer electrolyte material of the invention is the binder polymer in the catalyst layer. Accordingly, the ionomer of the present invention may find

use in one or more electrode in a fuel cell.

The catalyst layer may be applied from a catalyst paste or ink onto an appropriate substrate for incorporation into an MEA. The method by which the catalyst layer is applied is not critical to the practice of the present invention. Known catalyst coating techniques can be used and produce a wide variety of applied layers of essentially any thickness ranging from very thick, e.g., 30 $\mu$m or more, to very thin, e.g., 1 $\mu$m or less. Typical manufacturing techniques involve the application of the catalyst ink or paste onto either the polymer exchange membrane or a gas diffusion substrate. Additionally, electrode decals can be fabricated and then transferred to the membrane or gas diffusion backing layers. Methods for applying the catalyst onto the substrate include spraying, painting, patch coating and screen printing or flexographic printing. Preferably, the thickness of the anode and cathode electrodes ranges from about 0.1 to about 30 microns, more preferably less than 25 microns. The applied layer thickness is dependent upon compositional factors as well as the process used to generate the layer. The compositional factors include the metal loading on the coated substrate, the void fraction (porosity) of the layer, the amount of polymer/ionomer used, the density of the polymer/ionomer, and the density of the carbon support. The process used to generate the layer (e.g. a hot pressing process versus a painted on coating or drying conditions) can affect the porosity and thus the thickness of the layer.

In an embodiment, a catalyst coated membrane is formed wherein thin electrode layers are attached directly to opposite sides of the proton exchange membrane. In one method of preparation, the electrode layer is prepared as a decal by spreading the catalyst ink on a flat release substrate such as Kapton® polyimide film (available from E. I. du Pont de Nemours, Wilmington, DE, USA). The decal is transferred to the surface of the membrane by the application of pressure and optional heat, followed by removal of the release substrate to form a CCM with a catalyst layer having a controlled thickness and catalyst distribution. The membrane may be wet at the time that the electrode decal is transferred to the membrane, or it may be dried or partially dried first and then transferred. Alternatively, the catalyst ink may be applied directly to the membrane, such as by printing, after which the catalyst film is dried at a temperature not greater than 200°C. The CCM, thus formed, is then combined with a gas diffusion backing substrate to form an unconsolidated MEA.

In forming a catalyst ink comprising the ionomer of the present invention, the ionomer may be in the $-SO_2X$ form. After formation of the catalyst layer, MEA, or catalyzed-GDB, the ionomer in the electrode may be converted by hydrolysis to a salt form $-SO_2OM^1$ (typically $M^1 = Na^+$, $K^+$ or other univalent cation but $M^1 \neq H^+$), followed by optional ion-exchange to replace the cation $M^1$ with the cation desired for the application $M^2$, e.g. $M^2 = H^+$ for PEM fuel cells, $M^2 = Na^+$ for chlor-alkali, etc. Alternatively the ionomer may first be converted to an ionic form $-SO_2OM$, then dissolved or dispersed in a suitable solvent, the ink then being formed by addition of electrocatalyst and other additives, and the electrode, MEA, or catalyzed-GDB formed, followed by optional ion-exchange to replace the cation $M^1$ with the cation ($M^2$) desired for the application. An example of the second method is to exchange dispersions of the ionomer to the $-SO_2OM$ form with M=tetraalkylammonium ion which may increase the melt-flow properties of the ionomer, and thereby facilitate formation of a membrane, hot press catalyst layer decals onto the membrane, followed by acidification to give MEA's in $-SO_2OH$ form. The $-SO_3H$ form is also preferred for the ionomer for use in the electrode of a fuel cell.

Another method is to first combine the catalyst ink with a gas diffusion backing substrate, and then, in a subsequent thermal consolidation step, with the proton exchange membrane. This consolidation may be performed simultaneously with consolidation of the MEA at a temperature no greater than 200°C, preferably in the range of 140-160°C. The gas diffusion backing comprises a porous, conductive sheet material such as paper or cloth, made from a woven or non-woven carbon fiber, that can optionally be treated to exhibit hydrophilic or hydrophobic behavior, and coated on one or both surfaces with a gas diffusion layer, typically comprising a film of particles and a binder, for example, fluoropolymers such as PTFE. Gas diffusion backings for use in accordance with the present invention as well as the methods for making the gas diffusion backings are those conventional gas diffusion backings and methods known to those skilled in the art. Suitable gas diffusion backings are commercially available, including for example, Zoltek® carbon cloth (available from Zoltek Companies, St. Louis, Missouri) and ELAT® (available from E-TEK Incorporated, Natick, Massachusetts).

The ionomers of the invention show high ionic conductivity. Accordingly, any of the ionomers of the present invention may find use as a solid polymer electrolyte material in electrochemical cells, for example, as a constituent of one or more of the electrodes such as an electrode of a fuel cell. Accordingly, the invention also provides one or more electrode of a fuel cell comprising the solid polymer electrolyte material of the embodiments described herein. The ionomers of the invention also show surprisingly high oxygen permeability, which makes them particularly suitable as a constituent of the cathode.

**EXAMPLES**

The following abbreviations have been used:

E2: Freon™ E2 solvent, $CF_3CF_2CF_2OCF(CF_3)CF_2OCFHCF_3$

EW: Equivalent Weight

F11: $CFCl_3$

FC-40: Fluorinert™ Electronic Liquid (3M Company): mixture, primarily $N(CF_2CF_2CF_2CF_3)_3$ and $N(CF_3)(CF_2CF_2CF_2CF_3)_2$

HFB: hexafluorobenzene

HFPO Dimer Peroxide: $CF_3CF_2CF_2OCF(CF_3)(C{=}O)OO(C{=}O)CF(CF_3)OCF_2CF_2CF_3$

IBP: isobutyryl peroxide, $(CH_3)_2CH(C{=}O)OO(C{=}O)CH(CH_3)_2$

Mn: number average molecular weight

Mw: weight average molecular weight

PDD: Perfluorodimethyl dioxole

PFSVE: $CF_2{=}CFOCF_2CF_2SO_2F$

PMVE: perfluoromethylvinylether, $CF_2{=}CF(O)CF_3$

PSEPVE: $CF_2{=}CFOCF_2CF(CF_3)OCF_2CF_2SO_2F$

RSU: $FSO_2CF_2COF$

RSUP: $FSO_2CF_2(C{=}O)OO(C{=}O)CF_2SO_2F$

SFP: $FO_2SCF_2OCF(CF_3)CF_2OCF(CF_3)(C{=}O)OO(C{=}O)CF(CF_3)OCF_2CF(CF_3)OCF_2CF_2SO_2F$

Teflon®: Trademark of E. I. du Pont de Nemours and Company

TFE: tetrafluoroethylene, $CF_2{=}CF_2$

Vertrel™ XF: $CF_3CFHCFHCF_2CF_3$ (Miller-Stephenson Chemical Company, Danbury, CT, USA)

Water: Deionized water (Milli-Q Plus system, Millipore, Billerica, MA, USA)

**Example 1. Synthesis of Poly(PDD/PFSVE), 72.1: 27.9**

A magnetic stir bar was added to a sample vial and the vial capped with a serum stopper. Accessing the vial via syringe needles, the vial was flushed with nitrogen ($N_2$), chilled on dry ice, and then 8 ml of PDD was injected, followed by injection of 17.5 ml of PFSVE. The chilled liquid in the vial was sparged for 1 minute with $N_2$, and finally 1 ml of -0.2 M HFPO dimer peroxide in Vertrel™ XF was injected. The syringe needles through the serum stopper were adjusted to provide a positive pressure of $N_2$ to the vial as the vial was allowed to warm to room temperature with magnetic stirring of its contents. After three hours, the reaction mixture in the vial had thickened sufficiently to make magnetic stirring difficult. After 2 to 3 days, another 1 ml of HFPO dimer peroxide solution was injected and mixed in with manual shaking of the vial. No additional thickening of the reaction mixture occurred overnight. The contents of the vial were transferred to a dish lined with Teflon® film (E. I. du Pont de Nemours and Company, Wilmington, Delaware). The reaction mixture was devolatilized by blowing down for several hours with $N_2$ and then by putting the dish in a 100-120°C vacuum oven overnight. This gave 15.0 g of polymer (sulfonyl fluoride form, $-SO_2F$) in the form of a hard white foam. This polymer was analysed as follows:

Inherent viscosity: 0.384 dL/g in hexafluorobenzene

Tg = 135°C by DSC, 2$^{nd}$ heat, 10 °C/min, N2

Composition (by NMR): 72.1 mole % PDD, 27.9 mol % PFSVE

MW after hydrolysis to $-SO_3H$ form: Mn = 167,057; Mw = 240,706

**Examples 2-8. Synthesis of PDD/PFSVE Polymers**

Additional polymers (in the sulfonyl fluoride form, $-SO_2F$) made by the same method of Example 1 are listed in Table 1, below. Example 1 from above is included in the table. The order in the table follows decreasing PDD content.

**Table 1. Synthesis of Ionomer Precursor Polymers (Sulfonyl Fluoride Form, $-SO_2F$)**

| Example | PDD | PFSVE | Product | | | | |
|---|---|---|---|---|---|---|---|
| | | | Weight | Equivalent Weight | Mole % PDD/PFSVE | Inherent Viscosity, dL/g | Tg[1], °C (DSC)[1] |
| 2 | 4 ml | 5 ml | 7 g | 1320 g | 81.0/19.0 | 0.434 | 184 |
| 3 | 8 ml | 11 ml | 11 g | 1201 g | 79.1/20.1 | 0.333 | 185 |
| 4 | 8 ml | 12.7 ml | 15 g | 1095 g | 77.0/23.0 | 0.356 | 164 |
| 5 | 8 ml | 15 ml | 16 g | 1077 g | 76.6/23.4 | 0.468 | 168 |
| 1 | 8 ml | 17.5 ml | 15 g | 908 g | 72.1/27.9 | 0.384 | 135 |
| 6 | 16 ml | 35 ml | 36 g | 834 g | 69.5/30.5 | | |
| 7 | 18.5 ml | 39 ml | 36 g | 712 g | 63.9/36.1 | | |
| 8 | 4 ml | 10 ml | 8 g | 595 g | 56.5/43.5 | | |

[1]The Tg shown in Table 1 were measured by DSC on the precursor polymers (i.e. polymers in the $-SO_2X$ form with X=F).

**Comparative Example 1. 69.4: 30.6 Poly(PDD/PSEPVE)**

A magnetic stir bar was added to a 1 ounce glass bottle and the bottle capped with a serum stopper. Accessing the bottle via syringe needles, the bottle was flushed with nitrogen ($N_2$), chilled on dry ice, and then 9.3 grams of PDD was injected, followed by injection of 31.4 grams of PSEPVE. (PSEPVE is $CF_2{=}CFOCF_2CF(CF_3)OCF_2CF_2SO_2F$ or perfluorosulfonylethoxypropylvinylether, but sometimes abbreviated as PSVE in the art). The chilled liquid in the vial was sparged for 1 minute with $N_2$, and finally 1 ml of ~0.2 M HFPO dimer peroxide in Vertrel™ XF was injected. The syringe needles through the serum stopper were adjusted to provide a positive pressure of $N_2$ to the bottle while allowing it to warm to room temperature with magnetic stirring of its contents. By the next day, the reaction mixture in the bottle had thickened sufficiently to make magnetic stirring difficult. After 2 to 3 days at room temperature the contents of the bottle were stirred into 100 ml of $CF_3CH_2CF_2CH_3$ giving an upper fluid layer which was decanted off a gelatinous lower layer. The gelatinous lower layer was transferred to a dish lined with Teflon® film. This gel was devolatilized by blowing down for several hours with nitrogen and then by placing in a 80°C vacuum oven for 2 to 3 days. This gave 12.5 g of polymer (sulfonyl fluoride form, $-SO_2F$) in the form of a solid white foam. Analysis of this polymer found:

Composition (by fluorine NMR): 69.4 mole % PDD; 30.6 mol % PSEPVE
Inherent viscosity: 0.149 dUg in HFB.

A solution was formed from 3 g of the polymer in 27 g of HFB, filtered through a 0.45 μm membrane filter, and cast onto Kapton® polyimide film (DuPont) using a doctor blade with a 760 μm (30 mil) gate height. The film cracked when dry. Additional solutions were made with addition of small amounts of higher-boiling fluorinated solvents to the HFB solution to act as potential film plasticizers, for example, using E2:polymer at a 1:10 ratio, or perfluoroperhydrophenanthrene (Flutec PP11™, F2 Chemicals, Ltd., Preston, UK) at a PP11:polymer ratio of 1:10. After casting and evaporation of the HFB, these films also cracked. The polymer of Comparative Example 1 was not able to be formed into free-standing films by casting from HFB solutions, whereas each of Examples 1-8 formed free-standing films after casting from HFB solutions.

**Comparative Example 2. No Copolymerization of PDD/PSEPVE Using IBP Initiator**

A. Preparation of Isobutyryl Peroxide, IBP, initiator. A three neck flask was loaded with 78 ml of $CF_3CH_2CF_2CH_3$ and a solution of 7.93 g of potassium hydroxide pellets dissolved in 56 ml of deionized water. After chilling the reaction mixture to -2°C, 12.3 ml of 30% aqueous hydrogen peroxide were added with a mild exotherm. Once the reaction mixture was back down to 0°C, 7.8 ml of isobutyryl chloride dissolved in 13 ml of $CF_3CH_2CF_2CH_3$ were added dropwise at a rate that kept the reaction mixture below 10°C. After stirring the reaction mixture another 10 minutes at 0°C, the lower layer was separated and passed through a 0.45 μm filter. The filtrate was found to be 0.10 molar in isobutyryl peroxide (IBP) by iodometric titration.

B. Failure of PDD to Copolymerize with PSEPVE using IBP Initiator. A magnetic stir bar was added to a small glass bottle and the bottle capped with a serum stopper. Accessing the bottle via syringe needles, the bottle was flushed with nitrogen ($N_2$), chilled on dry ice, and then injected with 9.02 g of PDD, followed by injection of 30.48 g of PSEPVE. The chilled liquid in the bottle was sparged for 1 minute with $N_2$ and then 2.0 ml of the 0.1 M IBP in $CF_3CH_2CF_2CH_3$ was injected. The syringe needles through the serum stopper were adjusted to provide a positive pressure of $N_2$ to the bottle as the bottle was allowed to warm to room temperature with magnetic stirring of its contents. Since there was no noticeable viscosity build after 3 days, additional 2 ml samples of 0.1 M IBP were injected on days 3, 4, and 5 for a total of 8 ml of 0.1 M IBP. On the $6^{th}$ day the reaction mixture was added to 100 ml of $CF_3CH_2CF_2CH_3$ giving a trace of precipitate that dried down to 0.03 g of residue.

Polymerization to form PDD/PSEPVE copolymers using hydrocarbon initiators is problematic. Moreover, hydrocarbon initiators result in the introduction of hydrocarbon segments as polymer chain end-groups (for example, IBP results in $(CH_3)_2CH$- end groups on the fluoropolymers), which are expected to chemically degrade under fuel cell conditions, shortening polymer lifetime. Accordingly, perfluorinated initiator compounds are preferred (such as the HFPO dimer peroxide used in Example 1).

**Example 9. Poly(PDD/PFSVE) with $-CF(CF_3)OCF_2CF(CF_3)OCF_2CF_2SO_2F$ Ends**

A. Preparation of SFP Initiator. A solution of 7.92 g potassium hydroxide pellets in 56 ml of water was added to a 500 ml flask chilled to 0°C. The flask was further charged with 156 ml Vertrel™ XF and 12.3 ml of 30% hydrogen peroxide with continued ice bath cooling. A solution of 22 ml of $FSO_2CF_2CF_2OCF_2CF(CF_3)OCF(CF_3)(C{=}O)F$ dissolved in 26 ml of Vertrel™ XF was added dropwise as rapidly as possible while maintaining a temperature of 10-15°C with ice bath cooling. After stirring another 10 minutes at 0-10°C, the lower organic layer was separated and passed rapidly through a 0.45 μm filter. The filtrate titrated 0.185 M in the peroxide SFP (see abbreviations above).

B. Initiation of Poly(PDD/PFSVE) with SFP Initiator. A magnetic stir bar was added to a 2 ounce glass bottle and the bottle capped with a serum stopper. Accessing the bottle via syringe needles, the bottle was flushed with nitrogen ($N_2$), chilled on dry ice, and then 8 ml of PDD was injected, followed by injection of 17.5 grams of PFSVE. The chilled liquid in the vial was sparged for 1 minute with $N_2$, and finally 1 ml of 0.185 M SFP in Vertrel™ XF was injected, and the mixture sparged for 1 minute with $N_2$. The syringe needles through the serum stopper were adjusted to provide a positive pressure of $N_2$ to the bottle as the bottle was allowed to warm to room temperature. After 64 hours at room temperature, the reaction mixture had thickened sufficiently to stop the magnetic stir bar. The contents of the bottle were transferred to a Teflon®-lined dish, devolatilized for one day with $N_2$, and then put in a 100°C vacuum oven overnight. This gave 13.5 g of white polymer (sulfonyl fluoride form, $-SO_2F$). Composition (by NMR): 67.2 mole % PDD, 33.8 mol % PFSVE, with SFP polymer chain end-groups.

**Example 10. Poly(PDD/PFSVE) with $-CF_2SO_2F$ Ends**

A. Preparation of RSUP Initiator. A flask equipped with a magnetic stir bar was chilled to ~0°C and then loaded with 2.8 g of sodium percarbonate and 90 ml of Vertrel™ XF containing 35 mmoles (6.3 g) of $FSO_2CF_2(C{=}O)F$ ("RSU"). After stirring for 3 hours at 0°C under a positive pressure of nitrogen, the reaction mixture was decanted through 20 g of anhydrous calcium sulfate (Drierite™, W. A. Hammond, Drierite Company, Ltd., Xenia, OH, USA), and put through a 0.45 μm filter. The filtrate titrated 0.124 M in RSUP, $[FSO_2CF_2(C{=}O)OO(C{=}O)CF_2SO_2F]$.

B. Initiation of Poly(PDD/PFSVE) with RSUP Initiator. A magnetic stir bar was added to a 2 ounce glass bottle and the bottle capped with a serum stopper. Accessing the bottle via syringe needles, the bottle was flushed with nitrogen ($N_2$), chilled on dry ice, and then 8 ml of PDD was injected, followed by injection of 17.5 grams of PFSVE. The chilled liquid in the vial was sparged for 1 minute with $N_2$, and finally 1.5 ml of 0.124 M RSUP in Vertrel™ XF was injected, and the mixture sparged for 1 minute with $N_2$. The syringe needles through the serum stopper were adjusted to provide a positive pressure of $N_2$ to the bottle as the bottle was allowed to warm to room temperature. After 64 hours at room temperature, the reaction mixture had devolatilized leaving a stiff residue (the positive pressure of nitrogen having removed most of the volatile solvent). The contents of the bottle were transferred to a Teflon®-lined dish, blown down

for a day with $N_2$, and then put in a 100°C vacuum oven overnight. This gave 5.5 g of white polymer (sulfonyl fluoride form, $-SO_2F$). Composition (by NMR): 66.0 mole % PDD, 34.0 mol % PFSVE, with RSUP polymer chain end-groups.

PDD copolymerizes with PFSVE by a free radical mechanism. A starting radical R* adds to PDD or PFSVE monomer M to create a new radical RM* that adds additional monomer. New monomer continues to add until the polymerization terminates with the coupling of two free radicals to give the final isolated polymer, $R(M)_{n+1}$-$(M)_{m+1}R$.

Peroxide → R* radicals (Peroxide Breakdown)

R* + M → RM* (Initiation of Polymerization)

RM* + nM → $R(M)_{n+1}*$ (Polymer Chain Growth, Propagation)

$R(M)_{n+1}$ + $*(M)_{m+1}R$ → $R(M)_{n+1}$-$(M)_{m+1}R$ (Termination)

The R groups at the chain ends are derived from the initiator. Peroxides such as SFP and RSUP leave the polymer with $-SO_2F$ functionalities at the end of the polymer chain (see, for example, US 5,831,131, Example 44B), whereas initiators such as HFPO dimer peroxide and IBP do not result in $-SO_2F$ end groups, as summarized below, Table 2.

**Table 2. Summary of Polymer Chain End-Groups Resulting from Various Initiators**

| Initiator | End Group | End Group Type |
|---|---|---|
| IBP | $(CH_3)_2CH$- | Hydrocarbon alkyl |
| HFPO | $CF_3CF_2CF_2OCF(CF_3)$- | Perfluorinated alkyl |
| RSUP | $FSO_2CF_2$- | Perfluorinated alkyl with $-SO_2F$ |
| SFP | $FSO_2CF_2CF_2OCF_2CF(CF_3)OCF(CF_3)$- | Perfluorinated alkyl with $-SO_2F$ |

The sulfonyl fluoride functionality is converted to sulfonic acid groups prior to use in proton exchange membranes or electrodes of fuel cells. A higher sulfonic acid group concentration leads to higher proton conductivities (see Table 4; lower equivalent weight leads to higher proton conductivities). In an embodiment, 50 to 100% of the polymer chain end groups of the ionomer are $-SO_2F$ groups. In an embodiment, 50 to 100% of the polymer chain end groups of the ionomer are $-SO_2X$ groups, wherein X = F, Cl, OH or OM and wherein M is a monovalent cation. In an embodiment, 50 to 100% of the polymer chain end groups of the ionomer are pefluoroalkyl groups terminating with $-SO_2F$ groups. In an embodiment, 50 to 100% of the polymer chain end groups of the ionomer are pefluoroalkyl groups terminating with $-SO_2X$ groups, wherein X = F, Cl, OH or OM and wherein M is a monovalent cation.

**Example 11. Synthesis of Terpolymers**

PDD/PFSVE/TFE Terpolymers:

A 400 ml reaction vessel was charged with 24.7 g of PDD and 107.0 g of PFSVE, then chilled to -30°C. Next, 2.0 g of liquid TFE was added to the vessel. Finally, 15.5 g of a 10% HFPO dimer peroxide initiator solution in Vertrel® XF solvent was added, and the vessel was sealed and placed in a shaker. The reactor was heated to 30°C and held for 4 hours. The reactor was vented and purged, then the reaction mixture was recovered. The vessel was rinsed and the rinsate added to the reaction mixture. The mixture was placed on a rotovap to isolate the solids; 23 g of a white solid polymer was obtained (sulfonyl fluoride form, $-SO_2F$). NMR analysis indicated that the composition of the polymer was 46.1 mole % PDD, 32.5 mole % PFSVE and 21.3 mole % TFE. The material was dissolved in HFB at 40% solids, then diluted with FC-40 to increase viscosity and form a casting solution. A -125 μm (~5 mil) film was cast that was tough and flexible.

Other PDD/PFSVE/TFE polymers were prepared and characterized similarly, as shown in Table 3.

**Table 3. Synthesis of PDD/PFSVE/TFE Terpolymers**

| | Reactor Charge | | | | | Polymer Results | | | | |
|---|---|---|---|---|---|---|---|---|---|---|
| Polymer | PDD (g) | TFE (g) | PFSVE (g) | HFPO (g soln)[1] | | polym yield (g) | PDD Mole % | TFE Mole % | PFSVE Mole % | Equiv. Weight (g) |
| 11A | 9.0 | 2.0 | 65.2 | 3.5 | | 17 | 29.3% | 40.9% | 29.7% | 656 |
| 11B | 15.5 | 4.0 | 107.0 | 5.9 | | 12 | 43.7% | 17.2% | 39.1% | 595 |
| 11C | 24.7 | 2.0 | 107.0 | 15.5 | | 23 | 46.1% | 21.3% | 32.5% | 689 |

(continued)

| | Reactor Charge | | | | | Polymer Results | | | | |
|---|---|---|---|---|---|---|---|---|---|---|
| Polymer | PDD (g) | TFE (g) | PFSVE (g) | HFPO (g soln)[1] | | polym yield (g) | PDD Mole % | TFE Mole % | PFSVE Mole % | Equiv. Weight (g) |
| 11D | 46.1 | 2.0 | 130.7 | 20.7 | | 61 | 54.3% | 17.8% | 28.0% | 815 |
| 11E | 82.2 | 6.0 | 278.0 | 32.0 | | 62 | 57.5% | 10.4% | 32.1% | 747 |
| 11F | 92.7 | 3.0 | 278.0 | 32.0 | | 63 | 59.9% | 7.17% | 32.9% | 744 |
| [1]HFPO dimer peroxide initiator solution, 0.2 M. | | | | | | | | | | |

PDD/PFSVE/PMVE Terpolymers:

A 400 ml reaction vessel was charged with 27.8 g of PDD and 92.4 g of PFSVE, then chilled to -30°C. Next, 6.4 g of liquid PMVE was added to the vessel. Finally, 8.8 g of a 10% HFPO dimer peroxide initiator solution in E2 solvent was added, and the vessel was sealed and placed in a shaker. The reactor was heated to 30°C and held for 4 hours. The reactor was vented and purged, then the reaction mixture was recovered. The vessel was rinsed and the rinsate added to the reaction mixture. The mixture was placed on a rotovap to isolate the solids; 16 g of a brittle white solid was obtained. NMR analysis indicated that the composition of the polymer was 63.4 mole % PDD, 32.0 mole % PFSVE and 4.6 mole % PMVE (sulfonyl fluoride form, $-SO_2F$). The material was dissolved in HFB at 40% solids, then diluted with FC-40 to increase viscosity and form a casting solution. A ~125 μm (~5 mil) film was cast that was tough and flexible.

Other PDD/PFSVE/PMVE polymers were prepared and characterized similarly, as shown in Table 4.

**Table 4. Synthesis of PDD/PFSVE/PMVE Terpolymers**

| Polymer | PDD Mole % | PMVE Mole % | PFSVE Mole % | Equiv. Weight (g) |
|---|---|---|---|---|
| 11G | 63.4% | 4.6% | 32.0% | 785 |
| 11H | 57.2% | 6.5% | 36.3% | 692 |
| 11I | 58.4% | 15.8% | 25.8% | 932 |
| 11J | 49.6% | 24.5% | 25.9% | 902 |
| 11K | 52.4% | 13.6% | 34.0% | 720 |
| 11L | 44.8% | 21.2% | 34.0% | 703 |
| 11M | 55.1% | 14.3% | 30.6% | 795 |
| 11N | 47.3% | 22.3% | 30.4% | 779 |
| 11O | 53.4% | 15.3% | 31.3% | 775 |
| 11P | 48.8% | 23.6% | 27.6% | 851 |

## Example 12. Fluorine NMR Compositional Analysis of Polymers

The copolymer of Example 5 was examined by $^{19}F$-NMR at 470 MHz. The spectrum was acquired at 30°C using 60 mg of sample dissolved in hexafluorobenzene (HFB). A coaxial tube with $C_6D_6/CFCl_3$ was inserted in the NMR tube for locking and chemical shift referencing. The peak at about 43 ppm, due to the $-SO_2F$ of PSFVE, had intensity 10035 (arb. units). Several peaks were observed between -72 and -88 ppm due to the two $-CF_3$'s of PDD (6F's) and the $-OCF_2-$ of PFSVE (2F's), the sum of their intensities being 217707. The mole fraction of PFSVE was determined as 100035/[ [(217707-2(100035))/6] + 100035} = 23.4%. When hydrolyzed, the equivalent weight (EW) was estimated as (0.766*243.98 + 0.234*277.95)/0.234 = 1077. A similar analysis was performed on the other copolymers presented in Table 1 to determine their composition.

## Example 13. Conversion of Sulfonyl Fluoride Groups to Sulfonic Acid Groups and Measurement of Conductivity

A copolymer, Example 6, was prepared in a similar manner as in Example 1, except the reaction was double

in scale with 16 ml PDD, 35 ml of PFSVE, and 2 ml of initiator solution (see Table 1). $^{19}$F-NMR analysis indicated 30.5 mole% PFSVE and 834 EW. The copolymer (36 g), in sulfonyl fluoride form ($-SO_2F$), was dissolved in HFB to make a 15 wt% solution which was filtered through a 1 micron filter. The solution was cast using a doctor blade with 760 μm (30 mil) gate height onto Kapton® polyimide film (DuPont, Wilmington, DE, USA) and the HFB evaporated at ambient conditions to give a clear film. After separation from the Kapton®, larger pieces of the film together with film fragments (31.7 g total) were hydrolyzed to salt form by heating in KOH:dimethyl sulfoxide:water (10:20:70 wt%) for 24 h at 110°C. Examination of a film piece of 112 micron thickness by transmission FTIR showed the absence of a 1472 $cm^{-1}$ peak associated with sulfonyl fluoride, indicating completion of the hydrolysis. The film pieces were rinsed in water, filtered to recover the smaller fragments, and dried in vacuum overnight to give 31.33 g of hydrolyzed film. The film pieces were converted to acid form ($-SO_3H$) by soaking in 20 wt% nitric acid for 1 h at 80°C. After the initial soak, the nitric acid was replaced with fresh acid, and followed by a second 1 h soak. The films were rinsed for 15 min in water in a beaker, with continued changing to fresh water until the pH of the water in the beaker remained neutral. The larger pieces and film fragments recovered by filtering were dried in a vacuum oven at 100°C and reweighed to give 28.2 g of acid-form polymer. It was judged that the weight loss was the amount expected from loss of missing film fragments and loss on the filter papers, suggesting that dissolution of the polymer itself was minimal.

The elevated-temperature through-plane controlled-RH conductivity of the acid-form film for ionomer Example 6 was measured by a technique in which the current flowed perpendicular to the plane of the membrane. The lower electrode was formed from a 12.7 mm diameter stainless steel rod and the upper electrode was formed from a 6.35 mm diameter stainless steel rod. The rods were cut to length, and their ends were polished and plated with gold. The lower electrode had six grooves (0.68 mm wide and 0.68 mm deep) to allow moist air flow. A stack was formed consisting of lower electrode/GDE/membrane/GDE/upper electrode. The GDE (gas diffusion electrode) was a catalyzed ELAT® (E-TEK Division, De Nora North America, Inc., Somerset, NJ) comprising a carbon cloth with microporous layer, platinum catalyst, and 0.6-0.8 mg/$cm^2$ Nafion® application over the catalyst layer. The lower GDE was punched out as a 9.5 mm diameter disk, while the membrane and the upper GDE were punched out as 6.35 mm diameter disks to match the upper electrode. The stack was assembled and held in place within a 46.0 x 21.0 mm x 15.5 mm block of annealed glass-fiber reinforced machinable polyetheretherketone (PEEK) that had a 12.7 mm diameter hole drilled into the bottom of the block to accept the lower electrode and a concentric 6.4 mm diameter hole drilled into the top of the block to accept the upper electrode. The PEEK block also had straight threaded connections. Male connectors which adapted from male threads to O-ring-sealed tube (1M1SC2 and 2 M1SC2 from Parker Instruments) were used to connect to the variable moisture air. The fixture was placed into a small vice with rubber grips and torque to 10 inlb was applied using a torque wrench. The fixture containing the membrane was connected to 1/16" tubing (moist air fed) and 1/8" tubing (moist air discharge) inside a forced-convection thermostated oven for heating. The temperature within the vessel was measured by means of a thermocouple.

Water was fed from an Isco Model 500D syringe pump with pump controller. Dry air was fed (200 sccm maximum) from a calibrated mass flow controller (Porter F201 with a Tylan® RO-28 controller box). To ensure water evaporation, the air and the water mixture were circulated through a 1.6 mm (1/16"), 1.25 m long stainless steel tubing inside the oven. The resulting humidified air was fed into the 1/16" tubing inlet. The cell pressure (atmospheric) was measured with a Druck® PDCR 4010 Pressure Transducer with a DPI 280 Digital Pressure Indicator. The relative humidity was calculated assuming ideal gas behavior using tables of the vapor pressure of liquid water as a function of temperature, the gas composition from the two flow rates, the vessel temperature, and the cell pressure. The grooves in the lower electrode allowed flow of humidified air to the membrane for rapid equilibration with water vapor. The real part of the AC impedance of the fixture containing the membrane, $R_s$, was measured at a frequency of 100 kHz using a Solartron SI 1260 Impedance/Gain Phase Analyzer and SI 1287 Electrochemical Interphase with ZView 2 and ZPlot 2 software (Solartron Analytical, Famborough, Hampshire, GU14 0NR, UK). The fixture short, $R_f$, was also determined by measuring the real part of the AC impedance at 100 kHz for the fixture and stack assembled without a membrane sample. The conductivity, κ, of the membrane was then calculated as:

$$\kappa = t / ( (R_s - R_f) * 0.317\ cm^2),$$

where *t* is the thickness of the membrane in cm.

Films were first boiled in water, cooled to ambient temperature, then three water-wet films were stacked in the fixture for a total height of 290 microns. The ionic conductivity of the water-wet film of ionomer Example 6 at ambient temperature was measured to be 153 mS/cm. Through plane conductivity was also determined at elevated temperature and controlled relative humidity: at 80°C the conductivity was 5.5, 27, and 99 mS/cm at relative humidities of 25, 50 and 95%. The through plane conductivity of other ionomer films was determined similarly.

**Example 14. Preparation of Ionomer Dispersions**

A 400 ml Hastelloy shaker tube was loaded with acid-form polymer films (20.0 g) from Example 13 (i.e. polymer Example 6), 36.0 g ethanol, 143.1 g water, and 0.90 g of a solution of 30 wt% Zonyl® FS 1033D, $CF_3(CF_2)_5(CH_2)_2SO_3H$, in water. The tube was closed and heated, reaching a temperature of 270°C and a pressure of 1182 psi at 124 min into the run. The heaters were turned off and cooling commenced; the tube was still at 269.7°C at 134 min into the run, and had cooled to 146°C at 149 min into the run. After returning to ambient conditions, the liquid dispersion was poured into a jar, the tube rinsed with an addition of 80 g of fresh 20:80 ethanol:water solvent mixture, and the rinsings combined with the dispersion. The dispersion was filtered through polypropylene filter cloth, permeability 25 cfm (Sigma Aldrich, St. Louis, MO) and the weight of filtered dispersion was determined to be 261 g. The solvents were removed from a 1.231 g sample of the ionomer dispersion by drying in a vacuum oven, yielding 0.0895 g of solids. The solids content was calculated as 7.3%, implying a dissolution and recovery of 19 g of the original 20 g of polymer.

Unwanted cations (mostly metal ions) were removed from the ionomer dispersion as follows: Ion exchange resin beads (600 g, Dowex™ M-31, The Dow Chemical Company, Midland, MI, USA) were cleaned by extraction, first with 300 g ethanol at reflux for 2.4 hr, followed by reflux in 400 g of 75:25 n-propanol:water for 4.5 h, followed by a change to fresh 400 g of propanol:water and another 6 h reflux. The color of the solvent at the end of the third extraction was significantly less than on the second. The cooled beads were rinsed with water and stored in a plastic bottle. A small glass chromatography column was loaded with 50 ml of cleaned wet beads. The column was washed with 100 ml of 15% hydrochloric acid to insure the sulfonates were in acid form, followed by flowing water through the column until the pH was above 5, followed by flowing 100 ml of n-propanol. The ionomer dispersion was run through the column, followed by 100 ml of n-propanol. The eluent was examined with pH paper to determine when the acid-form ionomer was no longer coming off the column. The solids of the purified dispersion were measured to be 6.7%. Aliquots of the dispersion, 100 ml at a time, were concentrated on a rotary evaporator at 40°C, starting at 200 mbar pressure and slowly reducing pressure to 70 mbar. Solids were now 8.4%. (n-propanol content was determined to be 50% by IR spectroscopy).

United States Patent No. 6,150,426 indicates that perfluorinated ionomers dispersed at high temperatures, similar to that used in this Example, may be comprised of one polymer molecule per particle. The dispersion was analyzed by size exclusion chromatography carried out at 70°C. The samples were diluted to 0.10 wt % with a mobile phase of N,N-dimethylacetamide + 0.11 % LiCl + 0.03 % toluenesulfonic acid and then injected onto the column. Refractive index and viscosity detectors were used. The refractive index response was analyzed using a dn/dc of 0.0532 mL/g that was determined with analogous well-characterized samples of p(TFE/PFSVE) and p(TFE/ PSEPVE) ionomer dispersions. The p(PDD/PFSVE) polymer here had a number average molecular weight Mn of 132,000 and a weight average molecular weight Mw of 168,000. The same procedure was used for each polymer.

**Example 15. Oxygen Permeability and Conductivity**

$^{19}F$-NMR analysis of the $-SO_2F$ form of the copolymer from Example 4 indicated 23 mole% PFSVE, or EW of 1095. The copolymer from Example 4 was cast from HFB solution to give a film, and was then hydrolyzed, and acid exchanged using methods similar to those used for Example 13. The oxygen permeabilities of duplicate films were measured at 23°C and 0% RH using an instrument designed to measure films with high oxygen permeability (Mocon Ox-Tran®, Minneapolis, MN, USA). A 58 micron thick film gave an oxygen permeability of 14.5 X $10^{-9}$ scc cm/$cm^2$ s cmHg, and a 62 micron thick film gave a permeability of 15.0 X $10^{-9}$ scc cm/$cm^2$ s cmHg.

The acid-form copolymer film of Example 4 was evaluated using dynamic mechanical analysis between -50 and 252°C at 1 Hz frequency. The storage modulus was 1388 MPa at 25°C, declining to 855 MPa at 150°C. A small peak in tanδ (~0.03 above baseline) was observed at 137°C. tanδ increased rapidly above 220, reaching 0.7 at 252°C where the storage modulus was 29 GPa. The analysis was not carried out to higher temperature, and thus the peak and drop in tanδ with increasing temperature was not observed. The sample became weak (perfluorosulfonic acid groups are known to decompose more rapidly above 250°C). The glass transition temperature for this sample, normally assigned in perfluorinated ionomers to the large peak in tanδ, was above 250°C for this sample, but estimated to be lower than 260°C (by comparison to peak shapes of tanδ for other acid form p(TFE/PFSVE) ionomers).

Proton conductivities of the acid-form ionomers were determined as described above (Example 13). Table 5 presents the oxygen permeability and conductivity results for some of the ionomers.

**Table 5. Oxygen Permeability and Conductivity for some PDD/PFSVE Acid Form Ionomers**

| Ionomer Label | Polymer Composition (PDD/ PFSVE) | Solids % | EW Total g | Mn (k) | Mw (k) | Tg[1] DMA (°C) | 02 Perm 23°C 0% RH E-9 scc cm/cm2 s cmHg | Conductivity 80°C mS/cm | | |
|---|---|---|---|---|---|---|---|---|---|---|
| | | | | | | | | 25% RH | 50% RH | 95% RH |
| Ex. 2 | 81.0/19.0 | | 1320 | | | | 44 | | | |
| Ex. 3 | 79.1/20.9 | | 1201 | | | | 18 | 1.1 | 9.1 | 34 |
| Ex. 4 | 77.0/23.0 | 6.4% | 1095 | 143 | 212 | -257 | 15 | | | 52[2] |
| Ex. 5 | 76.6/23.4 | | 1077 | | | | 14.7 | | | 57 |
| Ex. 1 | 72.1/27.9 | 9.8% | 908 | 201 | 289 | -237 | 6.0 | 5.3 | 25 | 102 |
| Ex. 6[3] | 69.5/30.5 | 10.8% | 834 | 132 | 168 | -213 | | 5.5 | 27 | 99 |
| Ex. 7[3] | 63.9/36.1 | | 712 | | | | | | | |
| Ex. 8 | 56.5/43.5 | | 595 | | | | | | | |

[1]The Tg shown in Table 5 were measured by DMA on the acid form ionomers (i.e. polymers in the $-SO_3H$ form).
[2]Ex. 4 conductivity was measured for the water-wet film at ambient temperature.
[3]Ex. 6 and Ex. 7 were prepared at a larger scale than the other polymers, wherein all reactants / reagents were scaled up by a factor of 2.

The preparation of analogous PDD/PSEPVE polymers is problematic. Polymerization of the monomers using a hydrocarbon initiator (IBP) gives very low yields. The resulting polymer was hydrolyzed, acidified, and then a dispersion was prepared as described in Examples 13 and 14. The molecular weight, Mn, by SEC chromatography was 112,000 and the Tg was 178°C (by DSC). The equivalent weight, determined by $^{19}$F-NMR at 470 MHz, was 970 g, which equates to a monomer ratio of 68.3 PDD/ 31.7 PSEPVE. However, films from the dispersion were brittle, with some cracking, and free standing films could not be obtained. A repeat polymerization using a perfluorinated initiator (HFPO dimer peroxide) was also problematic (Comparative Example 1). The polymer obtained was dissolved in HFB to attempt film formation directly from a solvent solution. However, the films again cracked on drying (even with addition of plasticizer) and free standing films could not be obtained. Through plane conductivity of the fully-wet acid form of the polymer (sample prepared by hot pressing at 225°C) was 84 mS/cm at ambient temperature, and the equivalent weight, determined by $^{19}$F-NMR at 470 MHz, was 997 g, which equates to a monomer ratio of 69.4 PDD/30.6 PSEPVE.

The oxygen permeabilities were much higher for p(PDD/PFSVE) ionomers (acid form) than for p(TFE/PSEPVE) (traditional Nafion®) or p(TFE/PFSVE) ionomers (acid form), discussed below.

**Comparative Examples 3-11 p(TFE/PFSVE) and p(TFE/PSEPVE) Ionomers**

Comparative Example 3: Tetrafluoroethylene (TFE) and PFSVE were co-polymerized in a barricaded 1 L stirred Hastelloy C reactor at 35°C in a solvent of 2,3-dihydroperfluoropentane (Vertrel® XF). All the PFSVE was added at the beginning of the polymerization. A cooled solution of the initiator bis[2,3,3,3-tetrafluoro-2-(heptafluoropropoxy)-1-oxopropyl] peroxide (HFPO dimer peroxide) was pumped into the reactor continuously and the TFE was added to maintain the pressure at 105 psi. Polymerization time was ~80 minutes.

The polymer was hydrolyzed and acidified as follows: The sulfonyl fluoride-form polymer (about 157 g) was charged to a 2 L three-neck round bottom flask equipped with a glass mechanical stirrer, reflux condenser, and stopper. Based on the weight of the charge, the same weight of ethanol (about 157 g) and potassium hydroxide, 85% solution, (about 157 g) were added to the flask along with 3.67 times the weight for the amount of water (about 577 g). This gave a suspension containing 15 wt% polymer, 15 wt% potassium hydroxide (85% solution), 15 wt% ethanol, and 55 wt% water, which was heated to a reflux for about 7 hours. The polymer was collected by vacuum filtration on polypropylene filter cloth. The polymer was washed with four times the volume of water (about 600 mL) in the flask by heating to 80°C and collecting on the filter cloth. The water wash was repeated four times to give the potassium sulfonate-form polymer. The potassium sulfonate polymer was then washed with four times its volume of 20% nitric acid (about 600 mL: 123 mL nitric acid, 70%, diluted to 600 mL) by heating to 80°C for 1 hr. The polymer was collected on the filter cloth, washed with four times the volume of water (about 600 mL) by heating to 80°C, and collected on the filter cloth. The nitric acid/water wash sequence was repeated four times to convert the potassium sulfonate-form polymer to sulfonic acid-form polymer. The polymer was then washed repeatedly with four times the volume of water (about 600 mL) by heating to 80°C and collecting on the filter cloth until the washings were neutral (pH > 5). The polymer was air dried on the filter, then dried in a vacuum oven at 60°C under nitrogen purge. The polymer was transferred to a glass jar, redried (160 g), and sealed air tight to prevent the absorption of moisture.

A copolymer dispersion was made as follows: To a stirred (1000 rpm) 1 L Hastelloy pressure vessel were added 66 g of acid-form p(TFE/PFSVE) copolymer, 75 g ethanol, and 299 g water. The vessel was heated over 3 hr to 250°C and the temperature held for 1 hr at which point the pressure was 738 psi, and then the vessel was cooled to ambient temperature, and the dispersion was pumped out. The vessel was then rinsed with 150 g of n-propanol and the rinsings combined with the dispersion. Some small amounts of polymer remained undispersed and some was lost to wetting the sides of the vessel and in transfers; the polymer recovered in the dispersion was 87% of that charged. An additional 355 g of n-propanol and 155 g of water were added to dilute the dispersion. The dispersion was purified on an ion-exchange column similar to the method described for Example 14. Ethanol was removed and the dispersion concentrated using a rotary evaporator at 70°C until the concentration of ionomer was 5.6 wt%. The dispersion was cast onto Kapton® film using a doctor blade with a 1.27 mm gate height, and dried at ambient temperature under nitrogen. A second cast was made on top of the first, again dried under $N_2$ at ambient conditions. The film was coalesced by heating in an oven in air at 170°C for 5 min. The acid form ionomer film was removed from the Kapton® polyimide film (DuPont), giving an ionomer film of 45 $\mu$m thickness. The glass transition temperature was measured using DMA, the equivalent weight was determined from the total acid capacity determined by titration of a film sample, and the oxygen permeability was measured as in Example 15 (see Table 6, below).

Comparative Examples 3-5 are all TFE/PFSVE ionomers. Ionomers for Comparative Examples 4 and 5 were prepared in a similar manner to Comparative Example 3, but the TFE pressures were adjusted during the polymerization to obtain different equivalent weights.

The ionomers of Comparative Examples 6-11 are all TFE/PSEPVE ionomers.

**Table 6. Oxygen Permeability for Some TFE/PFSVE and TFE/PSEPVE Ionomers**

| Comparative Example | Polymer | Mole % TFE/PFSVE or TFE/ PSEPVE | EW (g) | $T_g$ °C | $O_2$ Permeability 23°C; 0% RH E-9 scc cm/cm2 s cmHg |
|---|---|---|---|---|---|
| 3 | p(TFE/PFSVE) | 82.0/18.0 | 734 | 117 | 0.081 |
| 4 | p(TFE/PFSVE) | 80.0/20.0 | 677 | 118 | 0.076 |
| 5 | p(TFE/PFSVE) | 81.5/18.5 | 720 | 117 | 0.053 |
| 6 | p(TFE/PSEPVE) | 87.5/12.5 | 980 | 102 | 0.136 |
| 7 | p(TFE/PSEPVE) | 86.6/13.4 | 924 | 100 | 0.102 |
| 8 | p(TFE/PSEPVE) | 87.4/12.6 | 972 | 103 | 0.098 |
| 9 | p(TFE/PSEPVE) | 87.3/12.7 | 963 | 97 | 0.120 |
| 10 | p(TFE/PSEPVE) | 86.8/13.2 | 934 | 101 | 0.119 |
| 11 | p(TFE/PSEPVE) | 84.8/15.2 | 837 | 100 | 0.057 |
| [1]All of the polymers shown here (Table 6) are in the acid form (i.e. polymers in the $-SO_3H$ form); the Tg shown here (Table 6) were measured by DMA on the acid form ionomers. | | | | | |

The ionomers used for Comparative Example 6 and 7 were the commercial Nafion® acid-form dispersions DE2020 and DE2029, respectively, both available from DuPont (Wilmington, DE, USA). For Comparative Example 8, the starting polymer was a commercial Nafion® resin in sulfonylfluoride form. It was hydrolyzed, acidified, and dispersed, and ion-exchanged by a procedure similar to that used in Comparative Example 3, except the dispersion was carried out at a temperature of 230°C, and the dispersion was concentrated to 23 wt%. The $SO_2F$-form p(TFE/PFSVE) polymers for Comparative Examples 9-11 were polymerized using monomers and polymerization methods similar to those described in United States Patent No. 3,282,875. The preparation of acid-form dispersions was similar to that of Comparative Example 8. For all the Comparative Examples 6-11, the forming of film from the dispersion was similar to Comparative Example 3, except a film of sufficient thickness was made from only one cast (because of the higher dispersion concentration, about 20-23% solids), and the coalescence temperature of the films was 150°C.

Figure 1 shows the oxygen permeability data of Table 5 and Table 6 plotted together as a function of ionomer equivalent weight.

The data shows that the PDD/PFSVE ionomers (Examples 1-5) have much higher oxygen permeability than

the TFE/PFSVE or TFE/PSEPVE ionomers (Comparative Examples 3-5 and Comparative Examples 6-11, respectively). Attempts to make PDD/PSEPVE ionomer membranes (Comparative Examples 1-2) were unsuccessful, as the films crack.

In order to obtain high oxygen permeability, preferably the PDD/PFSVE ionomers comprise from 60% to 85% PDD monomer units, and more preferably 70-85%, and even more preferably 75-85%. However, in order to achieve a useful balance of high conductivity with the high oxygen permeability, Table 5 shows that preferred PDD/PFSVE ionomers comprise from 60% to 80% PDD monomer units, and even more preferably 60% to 75% or 60% to 70% PDD monomer units. Table 1 shows such copolymers with PDD content ranging from 56.5% to 81%. It was found that the lower limit for the PDD content is approximately 56% PDD. Table 5 shows a PDD/PFSVE ionomer from the low end of the PDD range, with an equivalent weight of 595, or 56.5% PDD. However, after steps of hydrolysis, acidification, and then rinsing with water, it was found that much of the polymer was lost during the water rinse and that the copolymer was largely water soluble.

The ionomers described above were found to be effective as the solid polymer electrolyte materials used as the ionic conductor and binder in the cathode of a fuel cell.

**Example 16. Stability to Degradation of Ionomers**

Some perfluorosulfonic acid ionomers have been reported in the art to show signs of degradation during fuel cell operation and this chemical degradation is thought to proceed via the reaction of hydroxyl or peroxyl radical species. The Fenton's test has been shown to simulate this type of chemical degradation (see, for example, "Aspects of Chemical Degradation of PFSA Ionomers Used in PEM Fuel Cells", J. Healy et al.; Fuel Cells, 2005, 5, No.2, pages 302-308). The inventive solid polymer electrolyte materials described herein were evaluated for chemical degradation by using a Fenton's test to compare the inventive PDD/PFSVE ionomers with PDD/PSEPVE ionomers.

Synthesis of PDD/PSEPVE:

Three PDD/PSEPVE ionomers were prepared using HFPO dimer peroxide initiator and the following procedure. A magnetic stir bar was added to a reaction flask and the flask capped with a serum stopper. Accessing the flask via syringe needles, the flask was flushed with nitrogen ($N_2$), chilled on dry ice, and then PDD was injected, followed by injection of PSEPVE in the amounts shown in Table 7 below. The chilled liquid in the flask was sparged with $N_2$, and finally a solution of -0.25 M HFPO dimer peroxide in Vertrel™ XF Solvent was injected. A nitrogen atmosphere was maintained in the flask as the flask was allowed to warm to room temperature with magnetic stirring of its contents. After 1 day, another aliquot of HFPO dimer peroxide solution was injected and mixed in with stirring. After another day, the flask was transferred to a rotary evaporator and the polymer isolated. The polymer was further devolatilized by placing in a vacuum oven overnight at 80-120°C. The polymers were analyzed as follows: the composition of the polymer in the $-SO_2F$ form was measured by fluorine NMR, and the molecular weight by gel permeation chromatography. Specific conditions and results are in the table below.

**Table 7. Synthesis of PDD/PSEPVE Ionomers**

| Run # | PDD | ml SEPVE | ml initiator (day 1) | ml initiator (day 2) | g polymer | mol% PDD | Mol. Wt. ($M_n$) | Mol. Wt. ($M_w$) |
|---|---|---|---|---|---|---|---|---|
| 1 | 24 | 88 | 4.0 | 2.0 | 68.2 | 63.5% | 66,902 | 98,555 |
| 2 | 22 | 90 | 4.0 | 2.0 | 67.3 | 61.6% | 64,757 | 93,971 |
| 3 | 20 | 92 | 4.0 | 2.0 | 61.3 | 59.9% | 58,968 | 86,485 |

Approximately 0.53 gram of the hydrolyzed (proton form) polymer from run # 1 was tested for peroxide degradation rate using a Fenton's method. The polymer was dried, weighed again and placed in a test tube. A mixture of 425 g hydrogen peroxide ($H_2O_2$) with 6.2 mg ferrous sulfate ($FeSO_4$) was added to the test tube. A stirrer bar was placed in the test tube to keep the polymer submerged, and the test tube was heated to 80°C and held for 18 hrs at that temperature. After 18 hrs, the test tube was cooled and the solution was separated from the polymer. The solution was then tested for fluoride ion concentration using a fluoride electrode and millivolt meter. The polymer was dried and weighed, then placed back in a fresh $H_2O_2/FeSO_4$ mixture for another 18 hrs at 80°C. The analysis was repeated for a second time, then the process and analysis were repeated for a third time. The fluoride ion concentrations were converted to a total fluoride release rate using a material balance. The total fluoride emission of this sample of PDD/PSEPVE was 20.8 mg $F^-$/g polymer.

As a comparison, two similar PDD/PFSVE polymers were made using the process above with a larger reaction

vessel and three additions of initiator. The total initiator used was 1.48 ml initiator/(x moles of monomers), compared to 1.45 ml initiator/(x moles of monomers) used in Run #1 above, where x is the same total number of moles of monomers used for the two different ionomers, PDD/PSEPVE and PDD/PFSVE. The synthesis details for PDD/PFSVE ionomer are shown below in Table 8.

**Table 8. Synthesis of PDD/PFSVE Ionomer**

| Run # | ml PDD | ml PFSVE | ml initiator (day 1) | ml initiator (day 2) | ml initiator (day 3) | g polymer | mol% PDD | Mol. Wt. ($M_n$) | Mol. Wt. ($M_w$) |
|---|---|---|---|---|---|---|---|---|---|
| 4 | 100 | 225 | 8.0 | 6.0 | 4.0 | 222 | 67.3% | 110,468 | 150.093 |

The molecular weight of the polymer was more than 50% greater for the PDD/PFSVE ionomer relative to the PDD/PSEPVE ionomer of runs 1-3. This difference in molecular weight indicates that the PDD/PFSVE ionomer (run 4) has significantly fewer end groups than the PDD/PSEPVE ionomer (runs 1-3). In fact, the maximum number of end groups can be estimated from $M_n$, and is 495 for the PDD/PFSVE ionomer (run 4); and 808, 838 and 924, respectively, for the PDD/PSEPVE ionomers (runs 1, 2 and 3). An approximately 0.76 g sample of this PDD/PFSVE ionomer was also tested with Fenton's reagent as above. The total fluoride emission of this sample was 5.78 mg $F^-$/g polymer. This much lower fluoride release for the PDD/PFSVE ionomer confirms the lower number of end groups and the superior stability with respect to chemical degradation of the PDD/PFSVE ionomer relative to the PDD/PSEPVE ionomer.

## Claims

1. A solid polymer electrolyte material for use in an electrode of a fuel cell comprising one or more ionomer which comprises:

   (a) polymerized units of one or more fluoromonomer $A_1$ or $A_2$;

   $A_1$

   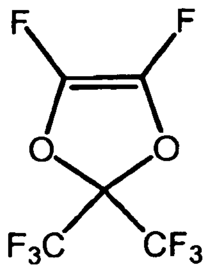

   $A_2$

   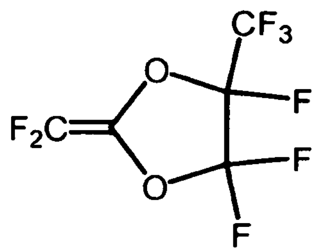

   and
   (b) polymerized units of one or more fluoromonomer (B):

   (B) $CF_2$=CF-O-[$CF_2$]-$SO_2X$

   wherein n = 2, 3, 4 or 5 and X = F, Cl, OH or OM, and wherein M is a monovalent cation; and wherein the ionomer has a through plane proton conductivity, at **80°C** and 95% relative humidity, greater than 70 mS/cm, and an oxygen permeability at 23°C and 0% relative humidity greater than 1 x $10^{-9}$ scc cm/($cm^2$ s cmHg).

2. The solid polymer electrolyte material of claim 1 wherein the ionomer further comprises polymerized units of one or more fluoromonomer (C):

   (C) $CF_2$=CF-O-[$CF_2$]$_m$-$CF_3$

   wherein m = 0, 1, 2, 3, or 4.

3. The solid polymer electrolyte material of claim 1 wherein the ionomer further comprises polymerized units of fluoromonomer (D): $CF_2=CF_2$.

4. The solid polymer electrolyte material of claim 1 in which 50 to 100% of the polymer chain end groups of the ionomer are $-SO_2X$, wherein X = F, Cl, OH or OM and wherein M is a monovalent cation.

5. The solid polymer electrolyte material of claim 1 wherein the ionomer has X = F or Cl and a Tg, as measured by Differential Scanning Calorimetry (DSC), in the range of 100 to 250°C.

6. The solid polymer electrolyte material of claim 1 wherein the ionomer has X = OH or OM and a Tg, as measured by Dynamic Mechanical Analysis (DMA), in the range of 200 to 270°C.

7. The solid polymer electrolyte material of claim 1 wherein the ionomer has a solubility in hexafluorobenzene, at 23°C, of more than 15 grams of ionomer per 1000 grams of hexafluorobenzene when in the X = F or X = Cl form.

8. The solid polymer electrolyte material of claim 1 wherein the ionomer has an equivalent weight in the range of 550 to 1400 grams.

9. The solid polymer electrolyte material of claim 1 wherein the ionomer comprises at least 30 mole percent of polymerized units of one or more fluoromonomer $A_1$ or $A_2$ or combination thereof.

10. The solid polymer electrolyte material of claim 1 wherein the ionomer comprises at least 12 mole percent of polymerized units of one or more fluoromonomer B.

11. The solid polymer electrolyte material of claim 1 wherein the ionomer comprises:

(a) from 51 to 85 mole percent of polymerized units of one or more fluoromonomer $A_1$ or $A_2$ or combination thereof; and
(b) from 15 to 49 mole percent of polymerized units of one or more fluoromonomer B.

12. The solid polymer electrolyte material of claim 2 wherein the ionomer comprises:

(a) from 20 to 85 mole percent of polymerized units of one or more fluoromonomer $A_1$ or $A_2$ or combination thereof;
(b) from 14 to 49 mole percent of polymerized units of one or more fluoromonomer B; and
(c) from 0.1 to 49 mole percent of polymerized units of one or more fluoromonomer C.

13. The solid polymer electrolyte material of claim 3 wherein the ionomer comprises:

(a) from 20 to 85 mole percent of polymerized units of one or more fluoromonomer $A_1$ or $A_2$ or combination thereof;
(b) from 14 to 49 mole percent of polymerized units of one or more fluoromonomer B; and
(c) from 0.1 to 49 mole percent of polymerized units of fluoromonomer D.

14. The use of the solid polymer electrolyte material of any one of claims 1-13 in an electrode of a fuel cell.

15. The electrode of a fuel cell comprising the solid polymer electrolyte material of any one of claims 1-13.

## Patentansprüche

1. Festes Polymerelektrolytmaterial zur Verwendung in einer Elektrode einer Brennstoffzelle, umfassend ein oder mehrere Ionomere, die Folgendes umfassen:

(a) polymerisierte Einheiten eines oder mehrerer Fluormonomere $A_1$ oder $A_2$:

$A_1$

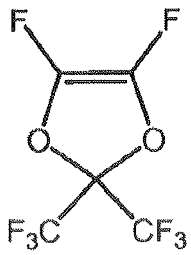

$A_2$

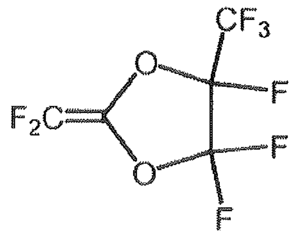

und

(b) polymerisierte Einheiten eines oder mehrerer Fluormonomere (B):

(B) $CF_2$=CF-O[$CF_2$]$_n$-$SO_2$X

wobei n = 2, 3, 4 oder 5 ist und X = F, Cl, OH oder OM ist und wobei M ein einwertiges Kation ist; und wobei das Ionomer eine Through-Plane-Protonenleitfähigkeit bei 80 °C und 95 % relativer Feuchte von mehr als 70 mS/cm und eine Sauerstoffdurchlässigkeit bei 23 °C und 0 % relativer Feuchte von mehr als 1 x $10^{-9}$ scc cm/($cm^2$ s cmHg) aufweist.

**2.** Festes Polymerelektrolytmaterial nach Anspruch 1, wobei das Ionomer des Weiteren polymerisierte Einheiten eines oder mehrerer Fluormonomere (C):

(C) $CF_2$=CF-O-[$CF_2$]$_m$-$CF_3$

umfasst, wobei m = 0, 1, 2, 3 oder 4 ist.

**3.** Festes Polymerelektrolytmaterial nach Anspruch 1, wobei das Ionomer des Weiteren polymerisierte Einheiten von Fluormonomer (D): $CF_2$=$CF_2$ umfasst.

**4.** Festes Polymerelektrolytmaterial nach Anspruch 1, wobei 50 bis 100 % der Polymerkettenendgruppen des Ionomers -$SO_2$X sind, wobei X = F, Cl, OH oder OM ist und wobei M ein einwertiges Kation ist.

**5.** Festes Polymerelektrolytmaterial nach Anspruch 1, wobei das Ionomer X = F oder Cl und eine Tg, wie durch Differentialscanningkalorimetrie (DSC) gemessen, im Bereich von 100 bis 250 °C aufweist.

**6.** Festes Polymerelektrolytmaterial nach Anspruch 1, wobei das Ionomer X = OH oder OM und eine Tg, wie durch dynamisch-mechanische Analyse (DMA) gemessen, im Bereich von 200 bis 270 °C aufweist.

**7.** Festes Polymerelektrolytmaterial nach Anspruch 1, wobei das Ionomer eine Löslichkeit in Hexafluorbenzol bei 23 °C von mehr als 15 Gramm Ionomer pro 1000 Gramm Hexafluorbenzol aufweist, wenn es in der X = F- oder X = Cl-Form vorliegt.

**8.** Festes Polymerelektrolytmaterial nach Anspruch 1, wobei das Ionomer ein Äquivalenzgewicht im Bereich von 550 bis 1400 Gramm aufweist.

**9.** Festes Polymerelektrolytmaterial nach Anspruch 1, wobei das Ionomer mindestens 30 Molprozent polymerisierte Einheiten eines oder mehrerer Fluormonomere $A_1$ oder $A_2$ oder Kombinationen davon umfasst.

**10.** Festes Polymerelektrolytmaterial nach Anspruch 1, wobei das Ionomer mindestens 12 Molprozent polymerisierte Einheiten eines oder mehrerer Fluormonomere B umfasst.

**11.** Festes Polymerelektrolytmaterial nach Anspruch 1, wobei das Ionomer Folgendes umfasst:

(a) 51 bis 85 Molprozent polymerisierte Einheiten eines oder mehrerer Fluormonomere $A_1$ oder $A_2$ oder eine Kombination davon; und

(b) 15 bis 49 Molprozent polymerisierte Einheiten eines oder mehrerer Fluormonomere B.

**12.** Festes Polymerelektrolytmaterial nach Anspruch 2, wobei das Ionomer Folgendes umfasst:

(a) 20 bis 85 Molprozent polymerisierte Einheiten eines oder mehrerer Fluormonomere $A_1$ oder $A_2$ oder eine Kombination davon;
(b) 14 bis 49 Molprozent polymerisierte Einheiten eines oder mehrerer Fluormonomere B; und
(c) 0,1 bis 49 Molprozent polymerisierte Einheiten eines oder mehrerer Fluormonomere C.

**13.** Festes Polymerelektrolytmaterial nach Anspruch 3, wobei das Ionomer Folgendes umfasst:

(a) 20 bis 85 Molprozent polymerisierte Einheiten eines oder mehrerer Fluormonomere $A_1$ oder $A_2$ oder eine Kombination davon;
(b) 14 bis 49 Molprozent polymerisierte Einheiten eines oder mehrerer Fluormonomere B; und
(c) 0,1 bis 49 Molprozent polymerisierte Einheiten von Fluormonomer D.

**14.** Verwendung des festen Polymerelektrolytmaterials nach einem der Ansprüche 1-13 in einer Elektrode einer Brennstoffzelle.

**15.** Elektrode einer Brennstoffzelle umfassend das feste Polymerelektrolytmaterial nach einem der Ansprüche 1 - 13.

**Revendications**

**1.** Matériau électrolyte polymère solide pour l'utilisation dans une électrode de pile à combustible comprenant un ou plusieurs ionomère(s) qui comprend(comprennent):

(a) des motifs polymérisés d'un ou plusieurs monomère(s) fluoré(s) $A_1$ ou $A_2$;

$A_1$

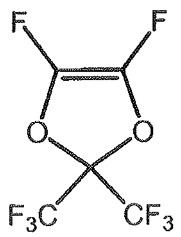

$A_2$

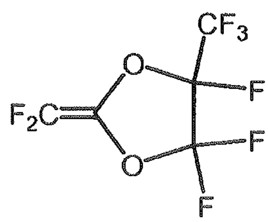

et
(b) des motifs polymérisés d'un ou plusieurs monomère(s) fluoré(s) (B):

(B) $CF_2$=CF-O-$[CF_2]_n$-$SO_2X$

dans laquelle n = 2, 3, 4 ou 5 et X = F, Cl, OH ou OM, et dans laquelle M est un cation monovalent; et dans laquelle l'ionomère a une conductivité des protons à travers un plan, à 80°C et 95 % d'humidité relative, supérieure à 70 mS/cm, et une perméabilité à l'oxygène à 23°C et 0 % d'humidité relative supérieure à 1 x $10^{-9}$ scc cm/($cm^2$ s cmHg).

**2.** Matériau électrolyte polymère solide selon la revendication 1 dans lequel l'ionomère comprend en outre des motifs polymérisés d'un ou plusieurs monomère(s) fluoré(s) (C):

(C) $CF_2$=CF-O-$[CF_2]_m$-$CF_3$

dans laquelle m = 0, 1, 2, 3, ou 4.

**3.** Matériau électrolyte polymère solide selon la revendication 1 dans lequel l'ionomère comprend en outre des motifs

polymérisés de monomère fluoré (D): $CF_2=CF_2$.

4. Matériau électrolyte polymère solide selon la revendication 1 dans lequel 50 à 100 % des groupes terminaux de la chaîne polymère de l'ionomère sont $-SO_2X$, dans laquelle X = F, Cl, OH ou OM et dans laquelle M est un cation monovalent.

5. Matériau électrolyte polymère solide selon la revendication 1 dans lequel l'ionomère a X = F ou Cl et une Tg, telle que mesurée par calorimétrie différentielle à compensation de puissance (ACD), dans la plage de 100 à 250°C.

6. Matériau électrolyte polymère solide selon la revendication 1 dans lequel l'ionomère a X = OH ou OM et une Tg, telle que mesurée par analyse mécanique dynamique (AMD), dans la plage de 200 à 270°C.

7. Matériau électrolyte polymère solide selon la revendication 1 dans lequel l'ionomère a une solubilité dans l'hexafluorobenzène, à 23°C, supérieure à 15 grammes d'ionomère pour 1 000 grammes d'hexafluorobenzène lorsqu'il se présente sous la forme X = F ou X = Cl.

8. Matériau électrolyte polymère solide selon la revendication 1 dans lequel l'ionomère a un poids équivalent dans la plage de 550 à 1 400 grammes.

9. Matériau électrolyte polymère solide selon la revendication 1 dans lequel l'ionomère comprend au moins 30 pour cent en mole de motifs polymérisés d'un ou plusieurs monomère(s) fluoré(s) $A_1$ ou $A_2$ ou une combinaison de ceux-ci.

10. Matériau électrolyte polymère solide selon la revendication 1 dans lequel l'ionomère comprend au moins 12 pour cent en mole de motifs polymérisés d'un ou plusieurs monomère(s) fluoré(s) B.

11. Matériau électrolyte polymère solide selon la revendication 1 dans lequel l'ionomère comprend:

(a) de 51 à 85 pour cent en mole de motifs polymérisés d'un ou plusieurs monomère(s) fluoré(s) $A_1$ ou $A_2$ ou combinaison de ceux-ci; et
(b) de 15 à 49 pour cent en mole de motifs polymérisés d'un ou plusieurs monomère(s) fluoré(s) B.

12. Matériau électrolyte polymère solide selon la revendication 2 dans lequel l'ionomère comprend:

(a) de 20 à 85 pour cent en mole de motifs polymérisés d'un ou plusieurs monomère(s) fluoré(s) $A_1$ ou $A_2$ ou combinaison de ceux-ci ;
(b) de 14 à 49 pour cent en mole de motifs polymérisés d'un ou plusieurs monomère(s) fluoré(s) B; et
(c) de 0,1 à 49 pour cent en mole de motifs polymérisés d'un ou plusieurs monomère(s) fluoré(s) C.

13. Matériau électrolyte polymère solide selon la revendication 3 dans lequel l'ionomère comprend:

(a) de 20 à 85 pour cent en mole de motifs polymérisés d'un ou plusieurs monomère(s) fluoré(s) $A_1$ ou $A_2$ ou une combinaison de ceux-ci;
(b) de 14 à 49 pour cent en mole de motifs polymérisés d'un ou plusieurs monomère(s) fluoré(s) B; et
(c) de 0,1 à 49 pour cent en mole de motifs polymérisés de monomère fluoré D.

14. Utilisation du matériau électrolyte polymère solide selon l'une quelconque des revendications 1 à 13 dans une électrode de pile à combustible.

15. Électrode de pile à combustible comprenant le matériau électrolyte polymère solide selon l'une quelconque des revendications 1 à 13.

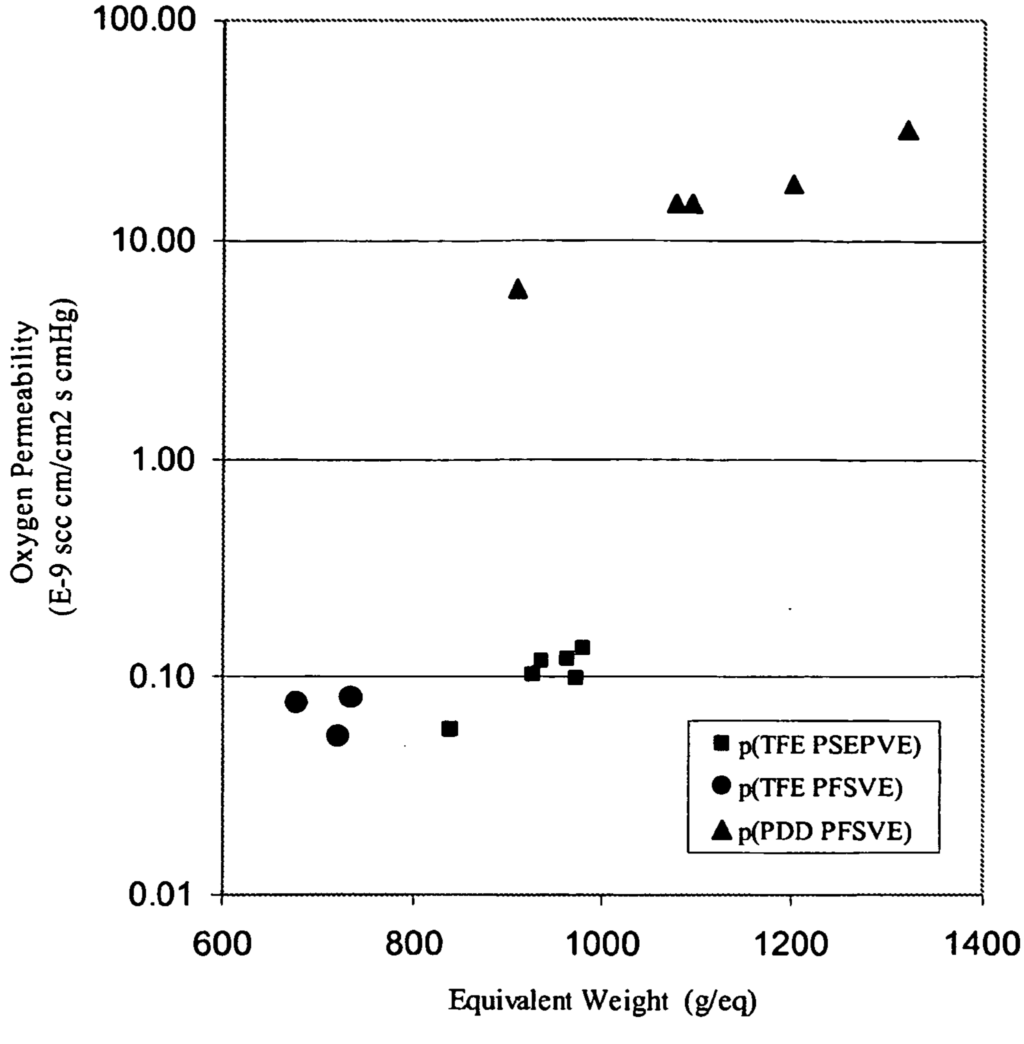
100.00
10.00
1.00
0.10
0.01
600
800
1000
1200
1400
Oxygen Permeability
(E-9 scc cm/cm2 s cmHg)
Equivalent Weight (g/eq)
p(TFE PSEPVE)
p(TFE PFSVE)
p(PDD PFSVE)

# Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3282875 A
- US 4358545 A
- US 7220508 B, Watakabe
- GB 1210794 A
- US 3664915 A
- US 3953566 A
- US 3962153 A
- US 4187390 A
- US 20090068528 A1
- US 5831131 A
- US 6150426 A


### Non-patent literature cited in the description


- **J. HEALY et al.** Aspects of Chemical Degradation of PFSA Ionomers Used in PEM Fuel Cells. *Fuel Cells,* 2005, vol. 5 (2), 302-308